# EUROPEAN PATENT SPECIFICATION

(11) **EP 4 018 819 B1**
(45) Date of publication and mention of the grant of the patent: **11.02.2026**
(21) Application number: 21216473.5
(22) Date of filing: 21.12.2021
(51) Int. Cl.: A01G 31/02

(54) **PLANT CULTIVATION APPARATUS**
PFLANZENZUCHTVORRICHTUNG
APPAREIL DE CULTURE DE PLANTES

(30) Priority: 23.12.2020 KR 20200181879
(43) Date of publication of application: 29.06.2022
(73) Proprietor: LG Electronics Inc., Seoul 07336 (KR)
(72) Inventor: Yoo, Imsung, Seoul 08592 (KR)
(74) Representative: Frenkel, Matthias Alexander

(56) References cited:
- CN-U- 201 766 924
- US-A- 4 245 433
- US-A- 5 598 663
- US-A1- 2017 347 547
- US-A1- 2019 075 741

## Description

### BACKGROUND OF THE DISCLOSURE

### Field of the Disclosure

The present disclosure relates to a plant cultivation apparatus and a method for controlling the same, and more particularly, relates to a plant cultivation apparatus for cultivating a plant in a cultivator disposed therein, and a method for controlling the same.

### Discussion of the Related Art

A plant cultivation apparatus refers to an apparatus that enables cultivation of a plant by artificially supplying and controlling light energy, moisture, soil, temperature, etc. necessary for plant growth. The plant cultivation apparatus includes a cultivation space which creates an environment suitable for plant growth. The plant grows in the cultivation space.

The plant cultivation apparatus may include a component for supplying moisture and nutrients for plant growth. A component for supplying light energy to the plant may also be included in the apparatus. Accordingly, the plant may be cultivated in the plant cultivation apparatus while light from the sun is not applied thereto.

The plant cultivation apparatus may include a nutrient liquid supply for supplying the plant with a nutrient liquid including moisture and nutrients for plant growth. The nutrient liquid supply may include storage in which the nutrient liquid is stored, and a supply part connected to the storage part to supply the nutrient liquid in the storage part to the cultivator receiving at least a portion of the plant.

The nutrient liquid from the nutrient liquid supply may not be consumed once, but may be used repeatedly or partially while being stored in the storage part. pH of the nutrient liquid stored in the storage part may change or foreign substances may be produced therein.

When the pH of the nutrient liquid stored in the storage part is equal to an inappropriate value at which the liquid is to be fed to the plant, or when bacteria or foreign substances are excessively present in the nutrient liquid, the growth of the plant may be adversely affected.

In this regard, Korean Patent Application Publication No. 10-2001-0099528 A discloses an apparatus for sterilization a nutrient liquid, that is, the technique for sterilizing a nutrient liquid using ultraviolet light.

Further, Korean Patent No. 10- 1901383 B1 discloses an apparatus for purification of a nutrient liquid, that is, the technique for performing sterilization of a nutrient liquid using ultraviolet light,

However, according to the above documents, a nutrient liquid management method using ultraviolet rays may not have an effect other than the sterilization effect, and may have the effect varying depending on turbidity of the nutrient liquid or a contamination amount of an ultraviolet emitter. US 2019/075741 A1 and US 2017/347547 A1 disclose plant cultivation apparatuses with control of the pH of the nutrient solution.

Therefore, it is an important task in the present technical field to effectively manage the pH of the nutrient liquid to be supplied to the plant and to effectively remove impurities and bacteria of the nutrient liquid to provide the plant with high quality nutrient liquid.

The invention is defined in independent system claim 1 and in method claim 14. Additional features of the invention are in dependent claims 2 to 13.

### SUMMARY OF THE DISCLOSURE

Embodiments of the present disclosure are to provide a plant cultivation apparatus and a method for controlling the plant cultivation apparatus in which the nutrient liquid to be fed to the plant is effectively managed so that the plant may grow effectively.

Further, embodiments of the present disclosure are to provide a plant cultivation apparatus capable of supplying high-quality nutrient liquid to a plant while effectively managing the pH of the nutrient liquid to be fed to the plant, and a method for controlling the same.

Further, embodiments of the present disclosure are to provide a plant cultivation apparatus capable of supplying high-quality nutrient liquid to a plant while effectively removing harmful bacteria contained in the nutrient liquid to be fed to the plant and a method for controlling the same.

Further, embodiments of the present disclosure are to provide a plant cultivation apparatus capable of supplying high-quality nutrient liquid to a plant while effectively removing impurities or foreign substances contained in the nutrient liquid to be fed to the plant and a method for controlling the same.

Further, embodiments of the present disclosure are to provide a plant cultivation apparatus that may effectively provide high-quality nutrient liquid to a plant while simultaneously achieving removal of bacteria and foreign substances contained in the liquid along with the pH management of the nutrient liquid to be fed to the plant, and a method for controlling the same.

In one embodiment of the present disclosure, an electrolysis module may reduce the pH of the nutrient liquid by generating and supplying hypochlorous acid to the nutrient liquid flowing through a space between electrodes using DC power. An activated carbon module may remove physical contamination of the nutrient liquid, detoxify the plant and increase the pH of the nutrient liquid.

A turbidity sensor may detect a level of physical contamination of the nutrient liquid due to plant roots or floating matter. The pH sensor may be provided to measure the pH of the nutrient liquid. When the pH of the nutrient liquid is out of a reference pH range, plant growth may be impaired.

A nutrient liquid tank may be connected to the sterilization module and the activated carbon module. Thus, sterilization of the nutrient liquid, filtration, and the pH of the nutrient liquid may be adjusted.

In on embodiment of the present disclosure, the apparatus may include storage in which the nutrient liquid is stored, and a sterilization module connected to the storage part. For example, the sterilization module may be an electrolysis module. The activated carbon module connected to the storage part may be included in the apparatus. The electrolysis module and the activated carbon module may be connected to the storage part via a pump and a valve.

The storage part may identify a current state of the nutrient liquid, and may include a pH sensor, a turbidity sensor, etc. for controlling an operation of the sterilization module and the activated carbon module. Depending on whether the sterilization module or the activated carbon module is activated, the pump and the valve may be activated or deactivated in an association manner therewith.

The sterilization module may produce hypochlorous acid. The activated carbon module may be provided in a form in which a cartridge containing activated carbon may be exchanged. When the pH of the nutrient liquid is high, or when off flavor is produced, the nutrient liquid may be circulated to the sterilization module in which the sterilization may proceed. When the pH of the nutrient liquid is low or impurities are present in the nutrient liquid, the nutrient liquid may be circulated to the activated carbon module.

The plant cultivation apparatus according to one embodiment of the present disclosure may include a cabinet, a nutrient liquid supply and a nutrient liquid manager.

In the cabinet, a cultivator into which at least a portion of the plant is received is placed. The nutrient liquid supply may include storage in which the nutrient liquid to be supplied to the cultivator is stored, and a supply part connected to the storage part to supply the nutrient liquid from the storage part to the cultivator.

The nutrient liquid manager includes a first manager to increase the pH of the nutrient liquid and a second manager to decrease the pH of the nutrient liquid. The nutrient liquid supplied from the storage part may flow through either the first manager or the second manager and may be resupplied to the storage part.

The nutrient liquid manager may further include a storage part channel, a valve, a first connective channel and a second connective channel. The storage channel may extend from the storage part. The valve may be disposed on the storage part channel. The first connective channel may connect the valve and the first manager to each other. The second connective channel may connect the valve and the second manager to each other.

In one embodiment of the present disclosure, the apparatus may further include a controller that controls the valve such that the nutrient liquid supplied through the storage channel may flow into one of the first connective channel and the second connective channel.

In one embodiment of the present disclosure, the apparatus may further include a pH measuring device configured to measure the pH of the nutrient liquid stored in the storage part, and a controller configured to control the nutrient liquid manager to perform a pH management mode in which when the measurement value of the pH measuring device is lower than or equal to a preset reference pH range, the nutrient liquid supplied from the storage part flows through the first manager, and when the measurement value of the pH measuring device is higher than the reference pH range, the nutrient liquid supplied from the storage part flows through the second manager.

The controller may be configured to control the nutrient liquid manager to perform the pH management mode such that the measurement value of the pH measuring device falls within an adequate pH range preset within the reference pH range.

When an execution duration of the pH management mode is greater than or equal to a preset pH management allowed time duration but the measurement value of the pH measuring device does not fall within the adequate pH range, the controller may be configured to transmit a nutrient liquid manager check signal to a user.

The controller may be configured to control the nutrient liquid manager so that a total operation time duration of one of the first manager and the second manager within a preset unit time duration is lower than or equal to a preset allowed operation time duration.

The apparatus further comprises a remaining amount measuring device configured to measure a remaining amount of the nutrient liquid stored in the storage part, wherein the controller may be configured to correct the allowed operation time duration based on a measurement value of the remaining amount measuring device.

According to the claimed invention, the first manager is configured to increase the pH of the nutrient liquid while removing impurities from the nutrient liquid to reduce turbidity thereof.

The first manager includes activated carbon, wherein the nutrient liquid supplied from the storage part flows through the first manager such that impurities are removed from the nutrient liquid and at the same time, the pH of the nutrient liquid is increased.

The second manager may be configured to apply an electrical current to the nutrient liquid supplied from the storage part to sterilize the nutrient liquid and at the same time, reduce the pH thereof.

The apparatus further comprises: a turbidity measuring device configured to measure turbidity of the nutrient liquid stored in the storage part; and a controller configured to control the nutrient liquid manager to perform a turbidity management mode such that when a measurement value of the turbidity measuring device is greater than or equal to a preset reference turbidity, the nutrient liquid supplied from the storage part flows through the first manager.

When an execution duration of the turbidity management mode is greater than or equal to a preset turbidity management allowed time duration but a measurement value of the turbidity measuring device is greater than or equal to a reference turbidity, the controller may be configured to transmit a nutrient liquid check signal to the user.

The apparatus further comprises a pH measuring device configured to measure the pH of the nutrient liquid stored in the storage part, wherein when a measurement value of the turbidity measuring device is equal to or greater than a reference turbidity and a measurement value of the pH measuring device is lower than or equal to a preset turbidity management pH value, the controller may be configured to control the nutrient liquid manager to perform the turbidity management mode.

When the measurement value of the turbidity measuring device is equal to or greater than the reference turbidity, and the measurement value of the pH measuring device exceeds the turbidity management pH value, the controller may be configured to control the nutrient liquid manager to perform a pH preparation mode such that the nutrient liquid supplied from the storage part flows through the second manager, wherein when the pH preparation mode has been performed such that the measurement value of the pH measuring device has been lower than or equal to the turbidity management pH value, the controller may be configured to perform the turbidity management mode.

When the measurement value of the pH measuring device is out of a preset reference pH range, the controller may be configured to control the nutrient liquid manager to perform a pH management mode such that the measurement value of the pH measuring device falls within an adequate pH range preset within the reference pH range, wherein the turbidity management pH value is set to have a value greater than or equal to a lower limit of the adequate pH range.

A method for controlling the plant cultivation apparatus may include a reference pH determination operation in which a controller determines whether a measurement value of a pH measuring device for measuring the pH of the nutrient liquid stored in the storage part falls within a preset reference pH range; and a pH management operation in which when it is determined in the pH management determination operation that the measurement value of the pH measuring device does not fall within the reference pH range, the controller controls the nutrient liquid manager to perform a pH management mode to adjust a pH of the nutrient liquid stored in the storage part.

Embodiments of the present disclosure may realize a plant cultivation apparatus and a method for controlling the plant cultivation apparatus in which the nutrient liquid to be fed to the plant is effectively managed so that the plant may grow effectively.

Further, embodiments of the present disclosure may realize a plant cultivation apparatus capable of supplying high-quality nutrient liquid to a plant while effectively managing the pH of the nutrient liquid to be fed to the plant, and a method for controlling the same.

Further, embodiments of the present disclosure may realize a plant cultivation apparatus capable of supplying high-quality nutrient liquid to a plant while effectively removing harmful bacteria contained in the nutrient liquid to be fed to the plant and a method for controlling the same.

Further, embodiments of the present disclosure may realize a plant cultivation apparatus capable of supplying high-quality nutrient liquid to a plant while effectively removing impurities or foreign substances contained in the nutrient liquid to be fed to the plant and a method for controlling the same.

Further, embodiments of the present disclosure may realize a plant cultivation apparatus that may effectively provide high-quality nutrient liquid to a plant while simultaneously achieving removal of bacteria and foreign substances contained in the liquid along with the pH management of the nutrient liquid to be fed to the plant, and a method for controlling the same.

### BRIEF DESCRIPTION OF THE DRAWINGS

FIG. 1 is a diagram showing an outer appearance of a plant cultivation apparatus according to an embodiment of the present disclosure.
FIG. 2 is a diagram showing a state that a plant cultivation apparatus according to one embodiment of the present disclosure is opened such that an inside thereof is exposed outwardly.
FIG. 3 is a diagram showing a partially cut away state of a plant cultivation apparatus cut out according to one embodiment of the present disclosure while being in the open state.
FIG. 4 is a diagram showing a cross-section of an inside of a plant cultivation apparatus according to an embodiment of the present disclosure.
FIG. 5 is a diagram showing a cultivator in a plant cultivation apparatus according to an embodiment of the present disclosure.
FIG. 6 is a diagram showing an internal configuration of a plant cultivation apparatus according to one embodiment of the present disclosure.
FIG. 7 is a conceptual diagram showing a nutrient liquid supply and a nutrient liquid manager in a plant cultivation apparatus according to one embodiment of the present disclosure.
FIG. 8 is a diagram showing pH change in nutrient liquid in a plant cultivation apparatus according to one embodiment of the present disclosure.
FIG. 9 is a flowchart showing a pH management operation of a control method of a plant cultivation apparatus according to one embodiment of the present disclosure.
FIG. 10 is a flowchart showing a turbidity management operation of a control method of a plant cultivation apparatus according to one embodiment of the present disclosure.
FIG. 11 is a diagram showing a flowchart in which a pH management operation and a turbidity management operation are performed together in a control method of a plant cultivation apparatus according to an embodiment of the present disclosure.

### DESCRIPTION OF SPECIFIC EMBODIMENTS

Hereinafter, embodiments of the present disclosure will be described in detail with reference to the accompanying drawings.

The same reference numbers may be allocated to the same or similar components. Redundant descriptions thereof will be omitted. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

As used herein, a suffix "module" or "unit" as used for a component are intended only for ease of describing the present disclosure, and the suffix "module" or "unit" itself does not have a specific meaning or role.

It will be understood that when an element or layer is referred to as being "connected to", or "coupled to" another element or layer, it may be directly on, connected to, or coupled to the other element or layer, or one or more intervening elements or layers may be present. In addition, it will also be understood that when an element or layer is referred to as being "between" two elements or layers, it may be the only element or layer between the two elements or layers, or one or more intervening elements or layers may also be present.

The terminology used herein is for the purpose of describing particular embodiments only and is not intended to limit the present disclosure. It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described equal to or lower than could be termed a second element, component, region, layer or section, without departing from the spirit and scope of the present disclosure.

As used herein, the singular forms "a" and "an" are intended to include the plural forms as well, unless the context clearly indicates otherwise.

It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof.

As used herein, the term "and/or" includes any and all combinations of one or more of the associated listed items. Expression such as "at least one of" when preceding a list of elements may modify the entirety of list of elements and may not modify the individual elements of the list. When referring to "C to D", this means C inclusive to D inclusive unless otherwise specified.

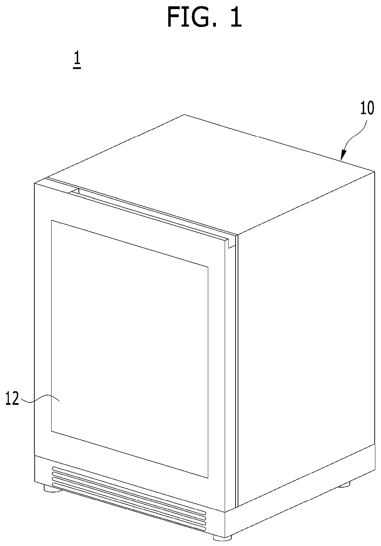

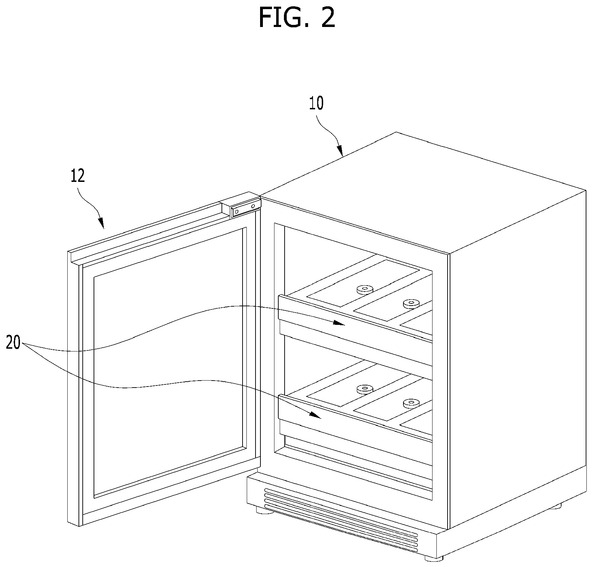

FIG. 1 is a diagram showing an outer appearance of a plant cultivation apparatus 1 according to an embodiment of the present disclosure. FIG. 2 is a diagram showing a state that a plant cultivation apparatus according to one embodiment of the present disclosure is opened such that an inside thereof is exposed outwardly. That is, FIG. 2 shows a state in which a door 12 of a cabinet 10 is opened in the plant cultivation apparatus 1 of FIG. 1 to expose an inside of the cabinet 10 outwardly.

Referring to FIGS. 1 and 2, the plant cultivation apparatus 1 according to one embodiment of the present disclosure includes the cabinet 10. The cabinet 10 defines the outer appearance of the plant cultivation apparatus 1. A cultivation space 15 for plant growth may be defined therein.

The cabinet 10 may be provided in a variety of shapes. FIGS. 1 and 2 show the cabinet 10 having a rectangular cross-section according to an embodiment of the present disclosure.

The cabinet 10 may have one open face so that the inside thereof is exposed outwardly through the open face. FIGS. 1 and 2 show that the open face of cabinet 10 is a front face according to an embodiment of the present disclosure.

A user may access the cultivation space 15 inside the cabinet 10 through the open face or the opening of the cabinet 10, and thus may access a cultivator 30 placed in the cultivation space 15.

In one embodiment of the present disclosure, the apparatus 1 may further include the door 12. The door 12 may be pivotably disposed at the cabinet 10 to selectively shield the open face or the opening of the cabinet 10. The user may access the cultivation space 15 inside cabinet 10 while opening the door 12.

Referring to FIG. 2, inside the cabinet 10, a bed 20 on which the cultivator 30 is seated may be provided. A receiving portion on which the cultivator 30 may be seated may be formed in the bed 20. The user may place the cultivator 30 onto the receiving portion and cultivate the plant therein.

The bed 20 may include a plurality of beds. In this case, the plurality of beds 20 may be arranged to be spaced apart from each other so that the user may easily access the receiving portion. In FIG. 2, according to an embodiment of the present disclosure, a plurality of plate-shaped beds 20 are shown to be arranged to be spaced apart from each other in a vertical direction.

However, the present disclosure is not necessarily limited thereto. A shape or an arrangement direction of the beds 20 may vary as needed.

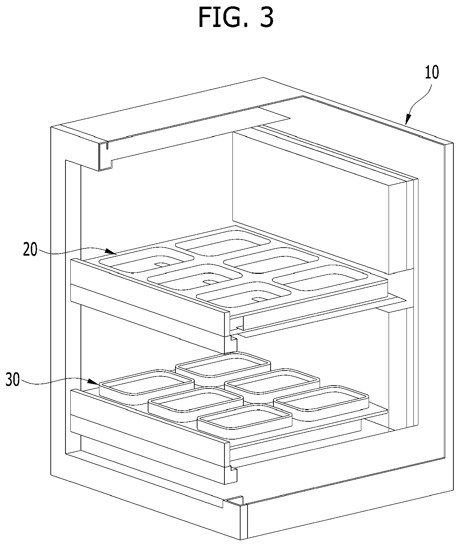

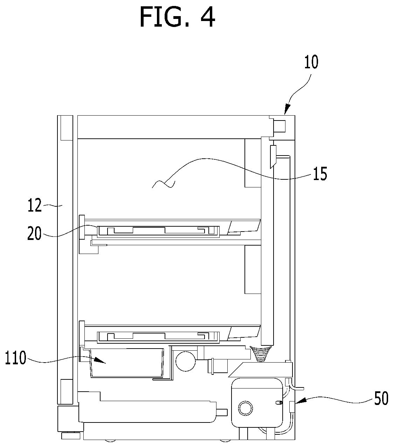

FIG. 3 is a diagram showing a partially cut away state of a plant cultivation apparatus cut out according to one embodiment of the present disclosure while being in the open state. FIG. 4 is a diagram showing a cross-section of an inside of a plant cultivation apparatus according to an embodiment of the present disclosure. That is, FIG. 3 shows the cultivation space 15 while a portion of the cabinet 10 is cut away according to one embodiment of the present disclosure. FIG. 4 shows a cross-section of the partially cut away cabinet 10 according to an embodiment of the present disclosure.

A plurality of receiving portions may be defined in each of the beds 20, and the number thereof may vary as needed. FIG. 3 shows that 6 receiving portions are defined in a single bed 20.

In FIG. 3, according to one embodiment of the present disclosure, two beds 20 are provided, that is, a lower bed 20 and an upper bed 20. The cultivator 30 is seated on the receiving portion of the lower bed, while the cultivator 30 is removed from the receiving portion of the upper bed.

Referring to the upper bed 20 of FIG. 3, the receiving portion may be defined in a recessed form in one face of the bed 20. The receiving portion has a cross-sectional shape corresponding to a cross-sectional shape of the cultivator 30 so that the cultivator 30 may be stably fitted into the receiving portion.

Referring to the lower bed 20 of FIG. 3, the cultivator 30 may be seated on the bed 20. That is, the bed 20 may include the receiving portion defined in a form of a depression or a protrusion in or on a top face of the bed. The cultivator 30 may be placed on or in the receiving portion.

The user may open the door 12 to access the cultivation space 15 inside the cabinet 10. The cultivator 30 may be formed integrally with the bed 20 or separately formed therewith such that the user may place the cultivator on the receiving portion.

Referring to FIG. 4, a machine room 50 may be disposed inside the cabinet 10. The machine room 50 may be provided integrally with the cultivation space 15 or may be provided separately from the cultivation space 15.

FIG. 4 shows that the machine room 50 separated from the cultivation space 15 is disposed in a bottom portion of the inside of the cabinet 10 according to one embodiment of the present disclosure.

The machine room 50 may receive therein various components. For example, at least a portion of an air circulator for circulating air inside the cabinet 10 or for inflowing outside-air into the cabinet 10 may be located in the machine room 50. At least a portion of the nutrient liquid supply 100 for supplying the nutrient liquid to the cultivator 30 may be placed in the machine room 50.

In one example, inside the cabinet 10, a light irradiator may be provided to provide light to the cultivator 30. The light irradiator may include a light emitter that generates light. The light emitter may be placed on a top face of the cabinet 10 or above the bed 20.

In FIG. 4, the nutrient liquid storage 110 of the nutrient liquid supply 100 in which the nutrient liquid is stored and a pump for causing flow of the nutrient liquid may be disposed inside the machine room 50. The plurality of bed 20 may be disposed above the machine room 50 to form a plurality of layers.

At least a portion of the air circulator and at least a portion of the nutrient liquid supply 100 may be disposed in rear of the bed 20 and inside the cabinet 10. For example, a circulation fan for circulating the air may be disposed in a rear portion of the cabinet 10. A nutrient liquid supply 120 to supply the nutrient liquid to the cultivator 30 may be disposed in a rear portion of the cabinet 10.

A rear space may be defined in a rear portion of the cabinet 10, and may be separated from the cultivation space 15 via a dividing wall. At least a portion of the air circulation unit and at least a portion of the nutrient liquid supply 100 may be disposed in the rear space.

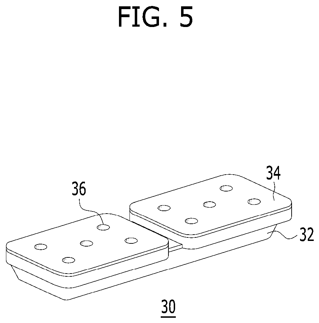

In one example, FIG. 5 shows an appearance the cultivator 30 seated on the receiving portion according to one embodiment of the present disclosure. The cultivator 30 may be provided in a form in which at least a portion of the plant is received therein, and may be provided integrally with the bed 20 or separately therefrom to be seated on the bed 20 by the user.

The cultivator 30 may include a cultivation vessel 32 in which a space is defined and a cultivator cover 34 combined with the cultivation vessel 32. The cultivation vessel 32 may have an open top face or an opening defined in a top face thereof. The cultivator cover 34 may be constructed to cover the open top face of the cultivation vessel 32 or an opening defined in the top face thereof.

FIG. 5 is a diagram showing a cultivator in a plant cultivation apparatus according to an embodiment of the present disclosure. That is, FIG. 5 shows a state in which the top face of the cultivation vessel 32 is opened, and the cultivator cover 34 is coupled to the cultivation vessel 32 to shield the open top face of the cultivation vessel 32 according to one embodiment of the present disclosure.

At least a portion of the plant received in the cultivator 30. For example, seeds of a plant or roots of a plant may be received inside the cultivator 30. The cultivator 30 may receive a cultivation medium in which plant seeds are received.

The cultivation medium may be prepared so as to receive therein the seeds of the plant or the roots of the plant, and may be contained inside the cultivation vessel 32. The cultivation medium may contain nutrients necessary for plant growth. Plants may grow upon receiving the nutrients from the cultivation medium.

The cultivator cover 34 may have a cover hole 36 defined in a position corresponding to the plant or the cultivation medium inside the cultivation vessel 32. The plant may grow in the inside of the cultivation vessel 32 and may extend outside the cultivator 30 through the cover hole 36, that is, may extend into the cultivation space 15.

The cultivator 30 may be constructed such that air or nutrient liquid may be fed to the plant through the cover hole 36. The cultivator 30 may be constructed such that the nutrient liquid of the nutrient liquid supply 100 may be supplied to the inside of the cultivation vessel 32 and then may be fed to the plant. The cultivator 30 may have a nutrient storage in which nutrients to be supplied to the plant are stored, in a separate manner from the cultivation medium.

A plurality of plants or cultivation medium may be disposed inside the cultivator 30. In FIG. 5, according to one embodiment of the present disclosure, five cover holes 36 are defined in each cover 34, and at least a portion of the plant is located in the vessel 32 disposed equal to or lower than the cover holes 36.

FIG. 5 shows a state in which a pair of cultivators 30 are provided integrally with each other. However, the present invention is not limited thereto. The cultivators 30 may be separated from each other, or the two or more cultivators 30 may be provided integrally with each other.

An indicator may be disposed on one face of the cultivation cover 34 of the cultivator 30. The indicator may be constructed to cover one face of the cultivator cover 34. A type of the plant received into the cultivator 30 may be displayed on the indicator.

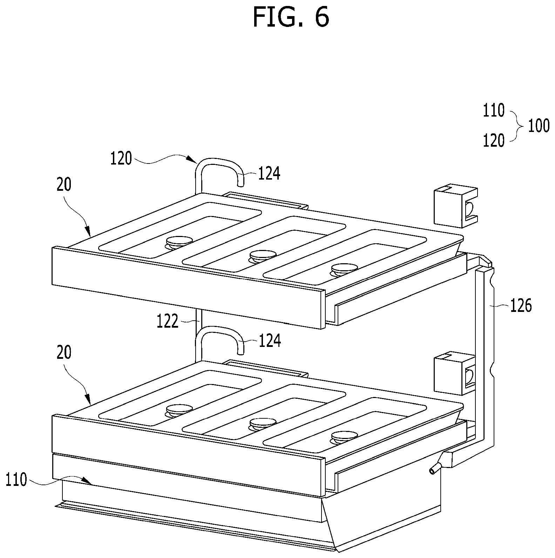

FIG. 6 is a diagram showing an internal configuration of a plant cultivation apparatus according to one embodiment of the present disclosure. In one example, FIG. 6 shows the bed 20 and the nutrient liquid supply 100 of the plant cultivation apparatus 1 according to an embodiment of the present disclosure.

Referring to FIG. 6, the nutrient liquid supply 100 may include the nutrient liquid storage 110 where the nutrient liquid is stored and the nutrient liquid supply 120 connected to the nutrient liquid storage 110 to supply the nutrient liquid from the nutrient liquid storage 110 to the cultivator 30.

The nutrient liquid is stored in an inner space of the nutrient liquid storage 110. Pre-prepared nutrient liquid may be stored therein, or water and nutrients may be mixed with each other inside the nutrient liquid storage 110 to prepare the nutrient liquid.

The nutrient liquid storage 110 may be exposed to the outside through the open face of the cabinet 10 such that the user may access the storage part. Alternatively, in addition to the open face of the cabinet 10, a separate opening may be defined such that the nutrient liquid storage 110 may be exposed to the outside through the separate opening.

The nutrient liquid supply 120 may be connected to the nutrient liquid storage 110 so that the nutrient liquid stored in the nutrient liquid storage 110 may be supplied to the cultivator 30 through the nutrient liquid supply 120. The nutrient liquid supply 120 may include a supply part channel 122 and a nutrient liquid discharger 124.

The supply part channel 122 may be connected to the nutrient liquid storage 110 so that the nutrient liquid discharged from the nutrient liquid storage 110 may flow through the supply part channel 122. When the nutrient liquid storage 110 is disposed at a lower level than that of the bed 20 on which the cultivator 30 is seated, a nutrient liquid pump for flowing the nutrient liquid may be provided on the supply part channel 122.

The supply part channel 122 may extend from the nutrient liquid storage 110 toward the bed 20. The nutrient liquid discharger 124 may be disposed in the supply part channel 122 to discharge the nutrient liquid flowing through the supply part channel 122 to the cultivator 30.

The nutrient liquid discharger 124 may be configured to supply the nutrient liquid directly onto the cultivator 30 or to the bed 20. the bed 20 may include a nutrient liquid receiver to which the nutrient liquid discharged from the nutrient liquid discharger 124 is supplied when the supply part 120 supplies the nutrient liquid to the bed 20. The bed may include a bed channel extending from the nutrient liquid receiver toward the cultivator 30 in which the nutrient liquid from the nutrient liquid receiver may flow into the cultivator 30.

The cultivator 30 may have a nutrient liquid inflow hole defined in a bottom thereof through which the nutrient liquid present in the bed 20 may inflow when the nutrient liquid discharger 124 discharges the nutrient liquid into the nutrient liquid receiver of the bed 20.

The bed channel may be defined in a top face or the inside of the bed 20, and may extend from the nutrient liquid receiver towards the receiving portion on which the cultivator 30 is seated. The nutrient liquid supplied through the nutrient liquid receiver may flow onto a bottom face of the receiving portion. The nutrient liquid in the receiving portion may be supplied through the nutrient liquid inflow hole into the inside of the cultivator while the cultivator 30 is being seated on the receiving portion.

When the cultivator 30 contains the cultivation medium, the cultivation medium may be formed in a columnar shape and may be supported on the bottom face of the cultivation vessel 32. The nutrient liquid supplied into the cultivation vessel 32 through the nutrient liquid inflow hole may be absorbed into a lower portion of the cultivation medium and may be delivered to the plant.

That is, in one embodiment of the present disclosure, the nutrient liquid supply 120 supplies the nutrient liquid to the nutrient liquid receiver of the bed 20 while the liquid flows through the nutrient liquid storage 110, the supply part channel 122, and the nutrient liquid discharger 124 in this order. The nutrient liquid in the nutrient liquid receiver may be supplied to the receiving portion through the bed channel of the bed 20. The nutrient liquid in the receiving portion may inflow through the nutrient liquid inflow hole into the cultivator 30 to supply the liquid to the cultivation medium or the plant.

FIG. 6 shows the nutrient liquid supply 120 in which the nutrient liquid discharger 124 discharges the nutrient liquid to the nutrient liquid receiver defined in the bed 20 according to one embodiment of the present disclosure.

In one example, the nutrient liquid supply 120 may further include a collection channel 126. The collection channel 126 may be configured to connect the bed 20 and the nutrient liquid storage 110 to each other. That is, the bed 20 may be constructed such that after the supply part of the nutrient liquid is finished, a portion of the nutrient liquid remaining in the receiving portion flows through the collection channel 126 and is collected to the nutrient liquid storage 110.

The collection channel 126 may be constructed to be opened and closed via a valve, etc. A controller 300 to be described later may be connected to the valve and configured to control whether or not to collect the nutrient liquid from the receiving portion. FIG. 6 shows the collection channel 126 extending from the bed 20 towards the nutrient liquid storage 110 according to one embodiment of the present disclosure.

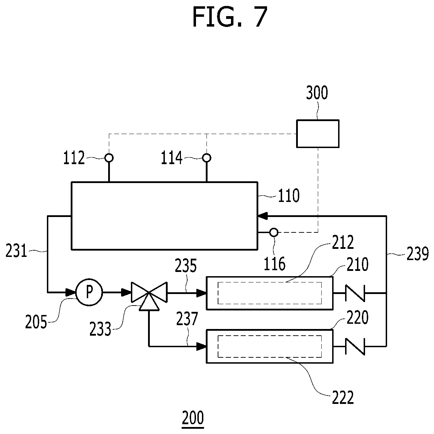

In one example, the plant cultivation apparatus 1 according to one embodiment of the present disclosure may include a nutrient liquid manager 200 for managing the nutrient liquid of the nutrient liquid storage 110. FIG. 7 is a conceptual diagram showing the nutrient liquid manager 200 according to an embodiment of the present disclosure.

As described above, the plant cultivation apparatus 1 according to an embodiment of the present disclosure may include the cabinet 10 and the nutrient liquid supply 100. The cabinet 10 may be constructed so that the cultivator 30 in which the at least portion of the plant is received is placed therein.

The nutrient liquid supply 100 may include the nutrient liquid storage 110 in which the nutrient liquid to be supplied to the cultivator 30 is stored and the nutrient liquid supply 120 connected to the nutrient liquid storage 110 to supply the nutrient liquid in the nutrient liquid storage 110 to the cultivator 30.

In one example, the nutrient liquid manager 200 includes a first manager 210 to increase the pH of the nutrient liquid and the second manager 220 to decrease the pH of the nutrient liquid. The nutrient liquid manager 200 may be configured such that the nutrient liquid supplied from the nutrient liquid storage 110 may be re-supplied to the nutrient liquid storage 110 via one of the first manager 210 and the second manager 220.

The pH of the nutrient liquid stored in the nutrient liquid storage 110 may vary or impurities may be produced therein due to long-term storage thereof. As described above, the pH of the nutrient liquid in the nutrient liquid storage 110 may vary or the impurities may be produced due to other components in a process of the collection from the cultivator 30.

In one embodiment of the present disclosure, the apparatus may provide a high-quality nutrient liquid to the plant while effectively managing the nutrient liquid in the nutrient liquid storage 110 through the nutrient liquid manager 200.

The nutrient liquid manager 200 may be disposed in the machine room 50 provided in the cabinet 10, etc. and may be connected to the nutrient liquid storage 110 of the nutrient liquid supply 100. The nutrient liquid manager 200 may include the first manager 210 and the second manager 220.

The nutrient liquid manager 200 may be configured such that the nutrient liquid supplied from the nutrient liquid supply 100 may flow through the nutrient liquid manager 200 and then may be fed back to the nutrient liquid supply 100. That is, the nutrient liquid from the nutrient liquid supply 100 may be circulated through the nutrient liquid manager 200.

The first manager 210 may be configured to increase the pH of the nutrient liquid flowing through the first manager 210. For example, the first manager 210 may contain a basic substance for increasing pH or contain the activated carbon.

When the first manager 210 contains an embedded consumable material, the first manager 210 may be configured to be replaceable. For example, the first manager 210 may include activated carbon. The activated carbon may be replaceable.

In one example, the second manager 220 may be configured to reduce the pH of the nutrient liquid flowing through the second manager 220. For example, the second manager 220 may include an acidic substance that reduces pH or may produce an acidic substance using an electric current or the like. The second manager 220 may employ electrolysis to decompose water using electric current or the like.

The nutrient liquid manager 200 may be configured such that the nutrient liquid supplied from the nutrient liquid storage 110 flows through one of the first manager 210 and the second manager 220. For example, the nutrient liquid manager 200 may be configured such that the nutrient liquid supplied from the nutrient liquid storage 110 flows through only one of the first manager 210 and the second manager 220, or sequentially flows through the first manager 210 and the second manager 220.

As described above, the pH of the nutrient liquid of the nutrient liquid storage 110 may vary due to degradation for the long-term storage or because the liquid may be mixed with other substances in the process of being collected through the bed 20 and the cultivator 30. The nutrient liquid whose the pH value is out of a certain range may interfere with the plant growth or cause abnormal condition.

Accordingly, one embodiment of the present disclosure may provide the nutrient liquid manager 200 capable of managing the pH of the nutrient liquid in the plant cultivation apparatus 1, thereby effectively managing the nutrient liquid stored in the nutrient liquid storage 110 to supply the high-quality nutrient liquid to the plant for a long time.

FIG. 7 is a conceptual diagram showing a nutrient liquid supply and a nutrient liquid manager in a plant cultivation apparatus according to one embodiment of the present disclosure. In one example, as shown in FIG. 7, in the plant cultivation apparatus 1 according to one embodiment of the present disclosure, the nutrient liquid manager 200 may further include the storage channel 231, the valve 233, a first connective channel 235 and a second connective channel 237.

The storage channel 231 may extend from the nutrient liquid storage 110, the valve 233 may be disposed on the storage channel 231, the first connective channel 235 may connect the valve 233 and the first manager 210 to each other, and the second connective channel 237 may connect the valve 233 and the second manager 220 to each other.

In one example, the plant cultivation apparatus 1 according to one embodiment of the present disclosure may further include the controller 300. The controller 300 may be configured to control the valve 233 to cause flow of the nutrient liquid supplied through the storage channel 231 into one of the first connective channel 235 and the second connective channel 237.

The storage channel 231 may extend from the nutrient liquid storage 110 and may be provided in a form of a pipe or the like so that the nutrient liquid stored in the nutrient liquid storage 110 may flow therein and therethrough. The valve 233 may be disposed on the storage channel 231 to control the nutrient liquid flow in the storage channel 231.

Each of the first connective channel 235 and the second connective channel 237 may be embodied as a pipe and may extend from the valve 233 and may be connected to each of the first manager 210 and the second manager 220. That is, the first connective channel 235 may connect the valve 233 and the first manager 210 to each other, and the second connective channel 237 may connect the valve 233 and the second manager 220 to each other.

Accordingly, the nutrient liquid flowing along the storage channel 231 may flow through the valve 233 and then through the first connective channel 235 or the second connective channel 237. That is, the valve 233 may be controlled so that the nutrient liquid flows into one of the first connective channel 235 and the second connective channel 237.

The controller 300 may be placed in various locations inside the cabinet 10, such as in the machine room 50. The controller 300 may be connected to the valve 233 and configured to control the valve 233.

In one embodiment of the present disclosure, the controller 300 controls the valve 233 so that the nutrient liquid of the nutrient liquid storage 110 selectively flows through one of the first connective channel 235 and the second connective channel 237, and thus flow through one of the first manager 210 and the second manager 220, thereby increasing or decreasing the pH of the nutrient liquid stored in the nutrient liquid storage 110. In this way, the nutrient liquid with an appropriate pH value may be fed to the plant.

In one example, in an embodiment of the present disclosure, the apparatus may further include a pH measuring device 112. The pH measuring device 112 may be configured to measure the pH of the nutrient liquid stored in the nutrient liquid storage 110. The pH measuring device 112 may be embodied in various types. The pH measuring device 112 may be provided in various locations such as the nutrient liquid storage 110, the nutrient liquid supply 120, the bed 20, and the nutrient liquid manager 200 to measure the pH of the nutrient liquid.

The controller 300 may be signally connected to the pH measuring device 112. The pH measuring device 112 may measure the pH of the nutrient liquid and transmit the pH measurement value to the controller 300. The controller 300 may control the nutrient liquid manager 200 using the measurement value received from the pH measuring device 112.

For example, the nutrient liquid manager 200 may include a management pump 205 for circulating the nutrient liquid in the nutrient liquid manager 200, etc. When the measurement value of the pH measuring device 112 is out of a certain range, the controller 300 may be configured to operate the management pump 205 to operate the nutrient liquid manager 200 and control the valve 233 to selectively use the first manager 210 and the second manager 220.

In one embodiment of the present disclosure, a preset reference pH range SP may be pre-stored to the controller 300 or the pH measuring device 112. The reference pH range SP means a pH range of the nutrient liquid for healthy plant growth without disturbing the plant growth. The reference pH range SP may be determined in various ways as needed.

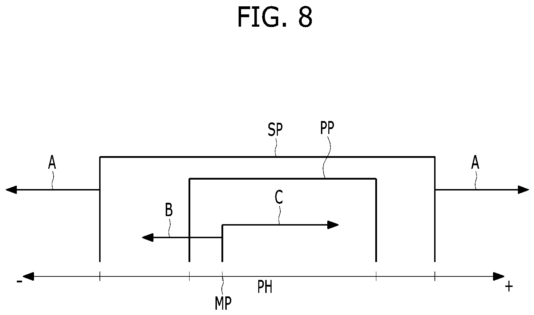

FIG. 8 is a diagram showing PH change in nutrient liquid in a plant cultivation apparatus according to one embodiment of the present disclosure. FIG. 8 shows the reference pH range SP as set according to one embodiment of the present disclosure.

The controller 300 may be configured to operate the nutrient liquid manager 200 at all times. Alternatively, when the measured value of the pH measuring device 112 is out of the preset reference pH range SP, the controller 300 may be configured to operate the nutrient liquid manager 200 such that a pH management mode may be performed.

That is, the controller 300 may control the nutrient liquid manager 200 to perform the pH management mode in which when the measurement value of the pH measuring device 112 is equal to or lower than the preset reference pH range SP, the nutrient liquid supplied from the nutrient liquid storage 110 flows through the first manager 210, while when the measurement value of the pH measuring device 112 is greater than or equal to the reference pH range SP, the nutrient liquid supplied from the nutrient liquid storage 110 flows through the second manager 220.

Specifically, the controller 300 may control the nutrient liquid manager 200 such that when the measurement value of the pH measuring device 112 is equal to or lower than the preset reference pH range SP, that is, is equal to or lower than a lower limit of the reference pH range SP, the nutrient liquid from the nutrient liquid storage 110 flows through the first manager 210.

For example, the controller 300 may control the valve 233 of the nutrient liquid manager 200 so that the nutrient liquid is supplied to the first manager 210 through the first connective channel 235. The nutrient liquid flowing through the first manager 210 may have an increased pH value depending on the characteristics of the first manager 210.

In one example, the controller 300 may control the nutrient liquid manager 200 such that when the measurement value of the pH measuring device 112 is above the preset reference pH range SP, that is, when the measurement value of the pH measuring device 112 is above an upper limit of the reference pH range SP, the nutrient liquid from the nutrient liquid storage 110 flows through the second manager 220.

For example, the controller 300 may control the valve 233 of the nutrient liquid manager 200 so that the nutrient liquid is supplied to the second manager 220 through the second connective channel 237. The nutrient liquid flowing through the second manager 220 may have a reduced pH value depending on the characteristics of the second manager 220.

In one example, FIG. 7 shows a re-supply channel 239 extending from the first manager 210 and the second manager 220 towards the nutrient liquid storage 110 according to an embodiment of the present disclosure. That is, the nutrient liquid manager 200 may further include the re-supply channel 239 connecting the first manager 210 and the second manager 220 to the nutrient liquid storage 110. The nutrient liquid flowing through the first manager 210 and the second manager 220 may be returned to the nutrient liquid storage 110 through the re-supply channel 239.

In one embodiment of the present disclosure, the apparatus may identify the pH value of the nutrient liquid of the nutrient liquid storage 110 through the pH measuring device 112. When the measurement value of the pH measuring device 112 is equal to or lower than the reference pH range SP which may be determined in various ways for healthy plant growth, the controller may increase the pH using the first manager 210. When the measurement value of the pH measuring device 112 is greater than the reference pH range SP, the controller may reduce the pH using the second manager 220. Thus, the management of the nutrient liquid to be fed to the plant may be performed effectively.

In one embodiment of the present disclosure, the controller 300 may control the nutrient liquid manager 200 so that the measurement value of the pH measuring device 112 falls within a preset adequate pH range PP within the reference pH range SP in the pH management mode.

The adequate pH range PP may be pre-stored in the controller 300, and may be determined in various ranges according to requirements. The adequate pH range PP may be set within a range within the reference pH range SP.

That is, a lower limit of the adequate pH range PP may be a value greater than or equal to the lower limit of the reference pH range SP, while a upper limit of the adequate pH range PP may have a value lower than or equal to the upper limit of the reference pH range SP. Further, the lower limit of the adequate pH range PP may be a value exceeding the lower limit of the reference pH range SP, while the upper limit of the adequate pH range PP may be a value lower than the upper limit of the reference pH range SP.

FIG. 8 shows an adequate pH range PP set within the reference pH range SP according to an embodiment of the present disclosure.

When the pH value of the nutrient liquid is out of the reference pH range SP for the healthy plant growth, the controller 300 operates the nutrient liquid manager 200 to adjust the pH value of the nutrient liquid to be within the reference pH range SP. The controller 300 may determine an end time of the pH management mode using the measurement value of the pH measuring device 112 or an operating time duration of the nutrient liquid manager 200.

However, when the operating of the nutrient liquid manager 200 because the pH value of the nutrient liquid is out of the reference pH range SP results in a situation in which the adjusted pH value of the nutrient liquid falls within the reference pH range SP but has a slight difference from the lower limit or the upper limit of the reference pH range SP, the pH value of the nutrient liquid is more likely to deviate from the reference pH range SP for a relatively short period of time. Thus, the efficiency of the nutrient liquid management is lowered.

Therefore, in one embodiment of the present disclosure, the controller manages the nutrient liquid of the nutrient liquid storage 110 to be within the reference pH range SP such that when the measurement value of the pH measuring device 112 is out of the reference pH range SP, the controller 300 performs the pH management mode to adjust the pH of the nutrient liquid so that the measurement value of the pH measuring device 112 has a value within the adequate pH range PP set within the reference pH range SP. This may effectively improve the pH management efficiency of the nutrient liquid through nutrient liquid manager 200.

For example, when the reference pH range SP is set in a range of 4 to 8, the adequate pH range PP may be set in a range of 5 to 7. However, the present disclosure is not limited thereto. The reference pH range SP and the adequate pH range PP may be set variously as needed.

With reference to FIG. 8, the pH management mode based on the pH value of the nutrient liquid according to one embodiment of the present disclosure will be described as follows.

FIG. 8 shows the reference pH range SP and other abnormal pH regions A. When the measurement value of the pH measuring device 112 is out of the reference pH range SP and is equal to the abnormal pH region A, the controller 300 may control the nutrient liquid manager 200 to perform the pH management mode.

When the pH management mode is performed, the pH value of the nutrient liquid corresponding to the abnormal pH region A may be gradually adjusted into the reference pH range SP. In this connection, the controller 300 may perform the pH management mode until the pH value of the nutrient liquid, that is, the measurement value of the pH measuring device 112 goes beyond the reference pH range SP and falls into the adequate pH range PP.

When the pH value of the nutrient liquid is within the adequate pH range PP, the controller 300 may terminate the pH management mode. The pH value of the nutrient liquid falling into the adequate pH range PP may maintain a value within the reference pH range SP for a predetermined period of time while having a difference from a critical value of the reference pH range SP.

In one embodiment of the present disclosure, when the execution duration of the pH management mode is greater than or equal to a preset pH management allowed time duration, the measurement value of the pH measuring device 112 does not fall within the adequate pH range PP, the controller 300 may be configured to transmit a check signal to check the nutrient liquid manager 200 to the user.

As described above, in one embodiment of the present disclosure, the controller 300 operates the nutrient liquid manager 200 to perform the pH management mode when the measurement value of the pH measuring device 112 is out of the reference pH range SP.

However, even when the execution duration of the pH management mode is above a certain amount, and when the measurement value of the pH measuring device 112 still does not have a value within the adequate pH range PP, the controller may determine that the pH management ability of the first manager 210 or the second manager 220 is significantly reduced or an abnormal state of the pH measuring device 112 occurs.

Further, when the pH management mode has operated for a too large duration, a state of the nutrient liquid may change unfavorably to the plant growth regardless of the pH control. For example, when the first manager 210 includes an activated carbon module 212 that uses the activated carbon, and as the operation time duration of the first manager 210 is larger, an amount of ions in the nutrient liquid may be reduced due to the activated carbon. This may interfere with plant growth.

Further, when the second manager 220 includes an electrolysis device 222 that uses electrolysis, and as the operation time duration of the second manager 220 is larger, more various substances may be precipitated on electrodes of the electrolysis device 222. This may reduce the electrolysis ability of the electrolysis device 222 and may shorten the lifespan of the second manager 220.

Accordingly, in one embodiment of the present disclosure, an appropriate time duration for which the measurement value of the pH measuring device 112 falls into the adequate pH range PP through the nutrient liquid manager 200 may be preset as the pH management allowed time duration. Even when the execution duration of the pH management mode exceeds the pH management allowed time duration, but when the pH value of the nutrient liquid does not fall within the adequate pH range PP, the controller 300 may be configured to transmit the check signal for checking the nutrient liquid manager 200 to the user.

The pH management allowed time duration may be determined as various values based on theoretical grounds and statistical results. Further, the check signal for checking the nutrient liquid manager 200 may be sent to the user in a variety of ways.

For example, the plant cultivation apparatus 1 according to one embodiment of the present disclosure may include a display device for providing visual information to the user. The controller 300 may be connected to the display device and transmit the check signal for checking the nutrient liquid manager 200 to the user through the display device in a visual way.

Further, the cabinet 10 may receive therein a speaker to provide audible information to the user. The controller 300 may transmit the check signal for checking the nutrient liquid manager 200 in an audible way to the user through the speaker.

Further, as described above, the light irradiation unit for providing light to the cultivator 30 or the plant may be disposed inside the cabinet 10. The controller 300 may by control the light emitter to provide a light pattern that the user may recognize, thereby transmitting the check signal for checking the nutrient liquid manager 200 to the user in an optical manner.

The user may perform exchange or check of the first manager 210 and the second manager 220 based on the check signal for checking the nutrient liquid manager 200, and may check the inside of the nutrient liquid storage 110 or the pH measuring device 112.

The first manager 210 and the second manager 220 may require periodic checking or replacement thereof to adjust the pH of the nutrient liquid. In one embodiment of the present disclosure, the controller 300 may transmit the check signal for checking the nutrient liquid manager 200 to the user based on the pH management result of the nutrient liquid using the nutrient liquid manager 200, such that the effective maintenance of the nutrient liquid manager 200 may be achieved.

In one embodiment of the present disclosure, the controller 300 may control the nutrient liquid manager 200 such that a total operation time duration of one of the first manager 210 and the second manager 220 is smaller than or equal to a preset allowed operation time duration within a preset unit time duration.

That is, the controller 300 may control the nutrient liquid manager 200 to prevent the total operation duration of the first manager 210 or the second manager 220 from exceeding the allowed operation time duration.

Specifically, as described above, the excessive use of the first manager 210 and the second manager 220 to manage the pH of the nutrient liquid may worsen the state of the nutrient liquid independently of the pH value of the nutrient liquid or may deteriorate the performance of the first manager 210 and the second manager 220.

Accordingly, in one embodiment of the present disclosure, the controller 300 may control the nutrient liquid manager 200 so that the total operation time duration of each of the first manager 210 and the second manager 220 does not exceed the allowed operation time duration within the preset unit time duration.

The unit time duration and the allowed operation time duration may be determined in various ways. The allowed operation time duration may be set to be smaller than the unit time duration. For example, when the unit time duration is set to one day, the allowed operation time duration may be set to a time duration smaller than 24 hours. When the unit time duration is set to one hour, the allowed operation time duration may be set to a time duration smaller than 60 minutes.

There may be various ways in which the controller 300 controls the nutrient liquid manager 200 so that the total operation time duration of each of the first manager 210 and the second manager 220 is smaller than or equal to the allowed operation time duration.

For example, when the total operation time duration of the first manager 210 exceeds the allowed operation time duration within the unit time duration, the controller 300 disables the pH management mode using the first manager 210 and then, after the unit time duration has elapsed, and may perform the pH management mode using the first manager 210.

Further, when the total operation time duration of the first manager 210 exceeds the allowed operation time duration, the controller 300 disables the pH management mode using the first manager 210 and may inform the user of the situation in which the allowed operation time duration exceeds the allowed operation time duration in a visual or audible manner.

In one embodiment of the present disclosure, the allowed operation time duration per the unit time duration of each of the first manager 210 and the second manager 220 may be preset, thereby managing the pH of the nutrient liquid, and at the same time, effectively suppressing occurrence of adverse phenomenon according to the pH control.

In an embodiment of the present disclosure, the apparatus further includes a remaining amount measuring device 116 that is configured to measure a remaining amount of the nutrient liquid stored in the nutrient liquid storage 110. The

controller 300 may be configured to correct the allowed operation time duration based on a measurement value of the remaining amount measuring device 116.

The remaining amount measuring device 116 may be disposed in the nutrient liquid storage 110 to measure the remaining amount of the nutrient liquid stored in the nutrient liquid storage 110, and may be provided in various forms, such as an electrode sensor.

As the amount of the nutrient liquid stored in nutrient liquid storage 110 increases, it is necessary to increase the execution duration of the pH management mode to control the PH. Deterioration of the state of the nutrient liquid or the deterioration of the performance of the first manager 210 and the second manager 220 as the operation time duration of each of the first manager 210 and the second manager 220 increases may be reduced.

That is, in one embodiment of the present disclosure, the controller 300 increases the allowed operation time duration as the remaining amount of the nutrient liquid in the nutrient liquid storage 110 increases, thereby flexibly operating the nutrient liquid manager 200 based on the remaining amount of the nutrient liquid and thus executing the effective nutrient liquid management.

According to the claimed invention, the first manager 210 is configured to increase the pH of the nutrient liquid while reducing turbidity thereof by removing impurities from the nutrient liquid.

That is, the first manager 210 is configured to reduce the turbidity of the nutrient liquid by removing impurities such as foreign substances contained in the nutrient liquid flowing through the first manager 210. Accordingly, the nutrient liquid manager 200 may increase the pH of the nutrient liquid and improve the turbidity of the nutrient liquid flowing through the first manager 210.

In one embodiment of the present disclosure, the first manager 210 may be configured such that the nutrient liquid supplied from the nutrient liquid storage 110 flows through the activated carbon to remove the impurities therefrom and increase the pH thereof.

That is, the first manager 210 may include the activated carbon module 212 including activated carbon. As the nutrient liquid in the nutrient liquid storage 110 flows through the activated carbon module 212, the pH thereof is increased and impurities are removed therefrom, such that the turbidity may be improved.

When using the activated carbon, and as the use period of the activated carbon increases, the amount of the activated carbon may decrease, or the ability to remove impurities or increase the pH by the activated carbon may decrease. Thus, the activated carbon module 212 may be replaced.

In one embodiment of the present disclosure, the second manager 220 may be configured to apply electric current to the nutrient liquid supplied from the nutrient liquid storage 110 to sterilize the nutrient liquid and reduce the pH thereof.

That is, the second manager 220 may generate the sterilization effect of the nutrient liquid by applying the electric current to the nutrient liquid flowing through the second manager 220. This may decompose the water via the application of the electric current to generate acidic substances such as hypochlorous acid to reduce the pH value of the nutrient liquid.

For example, the second manager 220 may include the electrolysis device 222 capable of applying the current into the nutrient liquid. The electrolysis device 222 may include an electrode in contact with the nutrient liquid. Thus, an electrolytic effect may be generated by applying a voltage to the electrode to apply the electric current to the nutrient liquid.

In one example, the plant cultivation apparatus 1 according to an embodiment of the present disclosure may further include a turbidity measuring device 114 provided to measure the turbidity of the nutrient liquid stored in the nutrient liquid storage 110.

When the measurement value of the turbidity measuring device 114 is greater than or equal to a preset reference turbidity, the controller 300 may perform a turbidity management mode to control the nutrient liquid manager 200 so that the nutrient liquid supplied from the nutrient liquid storage 110 flows through the first manager 210.

The turbidity measuring device 114 may be provided in the nutrient liquid storage 110, and may be configure top measure the turbidity of the nutrient liquid stored in the nutrient liquid storage 110. The turbidity measuring device 114 may be embodied in various types. For example, the turbidity measuring device 114 detects an amount of light travelling through the nutrient liquid, or images a surface of the nutrient liquid and perform image analysis to measure the turbidity or measures current or resistance value of the electrical current flowing through the nutrient liquid.

The controller 300 may be signally connected to the turbidity measuring device 114 and may receive a measurement value of the turbidity measuring device 114. Further, a reference turbidity is preset and pre-stored in the controller 300. When the measurement value of the turbidity measuring device 114 is greater than or equal to the reference turbidity, the turbidity management mode may be performed.

The reference turbidity may be set to various values based on theoretical grounds and statistical results. In the turbidity management mode, the controller 300 may control the nutrient liquid manager 200 to remove impurities from the liquid as the nutrient liquid from the nutrient liquid storage 110 flows through the first manager 210.

In one embodiment of the present disclosure, in an event in which the measurement value of the turbidity measuring device 114 is greater than or equal to the reference turbidity in a state in which an execution duration of the turbidity management mode is greater than or equal to a preset turbidity management allowed time duration, the controller 300 may inform the user of the event by transmitting a nutrient liquid check signal to the user.

In one embodiment of the present disclosure, even though the execution duration of the turbidity management mode is above a certain amount, but when reduction in the turbidity is not effectively achieved, the controller may determine that impurity removal performance of the first manager 210 for reducing the turbidity may be in a deteriorated state or the nutrient liquid itself may be in an abnormal state.

The abnormal state of the nutrient liquid may represent that the impurities in the nutrient liquid are excessive, the type of impurities is unusual, or a problem occurs inside the nutrient liquid storage 110 or abnormality in the turbidity measuring device 114 occurs.

Accordingly, in one embodiment of the present disclosure, the reference turbidity and the turbidity management allowed time duration may be preset and pre-stored in the controller. Thus, the controller 300 may transmit the nutrient liquid check signal based on the execution result of the turbidity management mode.

The nutrient liquid check signal may be transmitted to the user in various ways, for example, through the display device, the speaker, the light irradiator, etc. as the check signal for checking the nutrient liquid manager 200 as described above may be. The turbidity management allowed time duration may be preset and pre-stored in the controller 300, and may be determined in various ways based on theoretical basis and statistical results.

In one embodiment of the present disclosure, when the measurement value of the turbidity measuring device 114 is equal to or greater than the reference turbidity and the measurement value of the pH measuring device 112 is lower than or equal to a preset turbidity management pH value MP, the controller 300 may control the nutrient liquid manager 200 to perform the turbidity management mode.

As described above, in one embodiment of the present disclosure, the first manager 210 may be configured to increase the pH of the nutrient liquid and to filter the impurities of the nutrient liquid at the same time. That is, when the turbidity management mode is performed, the nutrient liquid flows through the first manager 210 such that the pH thereof may be increased.

Therefore, when the turbidity management mode is performed under an event in which the measurement value of the turbidity measuring device 114 is greater than or equal to the reference turbidity, the pH value of the nutrient liquid becomes excessively higher and may deviate from the reference pH range SP.

Accordingly, in one embodiment of the present disclosure, the turbidity management pH value MP as a reference for performing the turbidity management mode may be present and pre-stored in the controller 300. The turbidity management mode may be performed when the measurement value of the turbidity measuring device 114 is equal to or greater than the reference turbidity and the measurement value of the pH measuring device 112 is lower than or equal to the turbidity management pH value MP.

Based on the characteristic of the first manager 210 to increase the pH value of the nutrient liquid, the turbidity management pH value MP may have a value equal to or lower than a middle value of the reference pH range SP or adequate pH range PP.

In one embodiment of the present disclosure, when the measurement value of the turbidity measuring device 114 is equal to or greater than the reference turbidity, and the measurement value of the pH measuring device 112 exceeds the turbidity management pH value MP, the controller 300 may control the nutrient liquid manager 200 to perform a pH preparation mode in which the nutrient liquid supplied from the nutrient liquid storage 110 flows through the second manager 220.

Further, after the controller 300 performs the pH preparation mode such that the measurement value of the pH measuring device 112 is lower than or equal to the turbidity management pH value MP, the controller 300 may perform the turbidity management mode.

Specifically, when the measurement value of the turbidity measuring device 114 is greater than or equal to the reference turbidity and the measurement value of the pH measuring device 112 exceeds the turbidity management pH value MP, the controller 300 may perform the pH preparation mode for lowering the pH value of the nutrient liquid.

Unlike the pH management mode, the pH preparation mode may adjust the pH value of the nutrient liquid even when the pH value of the nutrient liquid is within the reference pH range SP or the adequate pH range PP.

With reference to FIG. 8, description of the pH management mode and the pH preparation mode for the turbidity management mode according to one embodiment of the present disclosure will be made as follows.

As described above, when the pH value of the nutrient liquid is equal to the abnormal pH region A, the pH management mode may be executed to adjust the pH value of the nutrient liquid to a value within the adequate pH range PP. In one example, when the turbidity management pH value MP exceeds the turbidity management pH value MP even when the pH value of the nutrient liquid is within the reference pH range SP or the adequate pH range PP, the pH preparation mode may be performed to adjust the pH value of the nutrient liquid to a value lower than or equal to the turbidity management pH value MP.

That is, the turbidity management mode may be configured as follows: when the pH value of the nutrient liquid is in a region C exceeding the turbidity management pH value, the turbidity management mode may be performed after the pH preparation mode has been executed; or when the pH value of the nutrient liquid is in a region B equal to or lower than the turbidity management pH value, the turbidity management mode may be performed without the pH preparation mode.

In one embodiment of the present disclosure, the apparatus may properly adjust the pH value of the nutrient liquid and remove the impurities of the nutrient liquid or perform sterilization using the first manager 210 and the second manager 220. Furthermore, ensuring that the pH value of the nutrient liquid is within the reference pH range SP or the adequate pH range PP even when the turbidity lowering process via the removal of impurities is performed may allow the nutrient liquid to be effectively managed and fed to the plant.

In one embodiment of the present disclosure, the turbidity management pH value MP may be set to have a value greater than or equal to the lower limit of the adequate pH range PP.

Specifically, as described above, in one embodiment of the present disclosure, the turbidity management mode may be conducted to increase the pH value of the nutrient liquid. Thus, the turbidity management pH value MP may have a value lower than or equal to a middle value of the reference pH range SP or the adequate pH range PP. As the turbidity management pH value MP is lower, this may not interfere with performance of the turbidity management mode.

In one example, as described above, the pH management mode may be conducted to adjust the pH value of the nutrient liquid to a value within the adequate pH range PP. In this connection, there may be cases where when the turbidity management pH value MP has a value lower than the lower limit of the adequate pH range PP, the turbidity management mode may not be performed immediately even after the pH value of the nutrient liquid has been adequately adjusted via the pH management mode.

For example, when the turbidity management pH value MP has a value lower than the lower limit of the adequate pH range PP, a following situation may occur: when the pH value of the nutrient liquid is equal to a value equal to or lower than the reference pH range SP, the pH value of the nutrient liquid may be adjusted to a value within the adequate pH range PP via the pH management mode; however, although the pH value of the nutrient liquid has been adjusted to the adequate value via the pH management mode, the process of adjusting the pH for the turbidity management mode should be performed again; thus, the meaning of the adequate pH range PP may be insignificant and thus, the pH management mode may be inefficient.

Accordingly, in one embodiment of the present disclosure, the turbidity management pH value MP may be set to be equal to or higher than the lower limit of the adequate pH range PP. Thus, the turbidity management mode may be performed on the nutrient liquid whose a pH value has been adjusted via the pH management mode without additional pH adjustment.

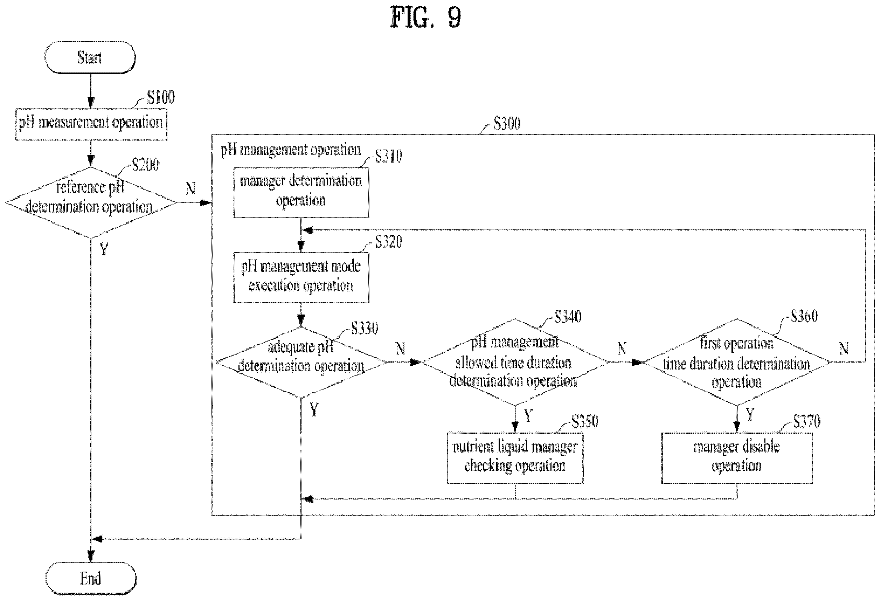

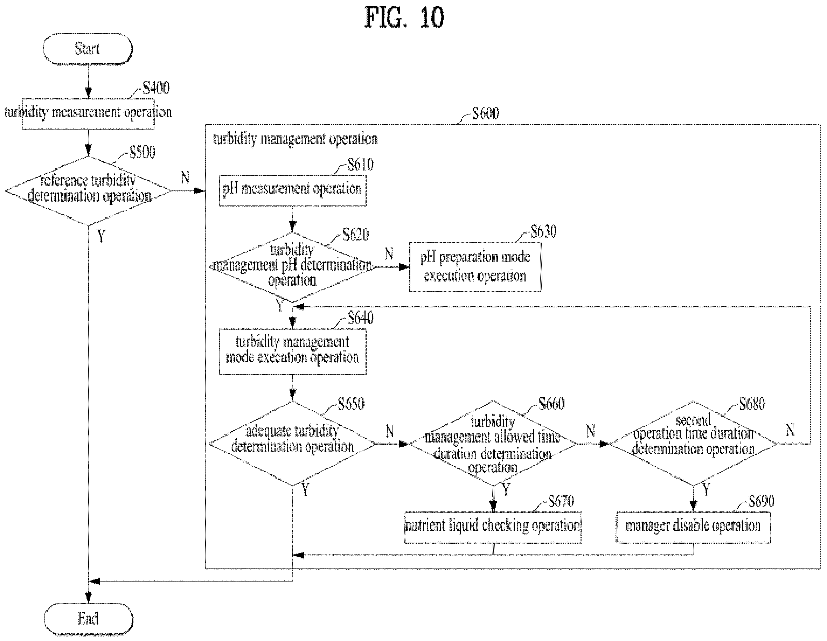

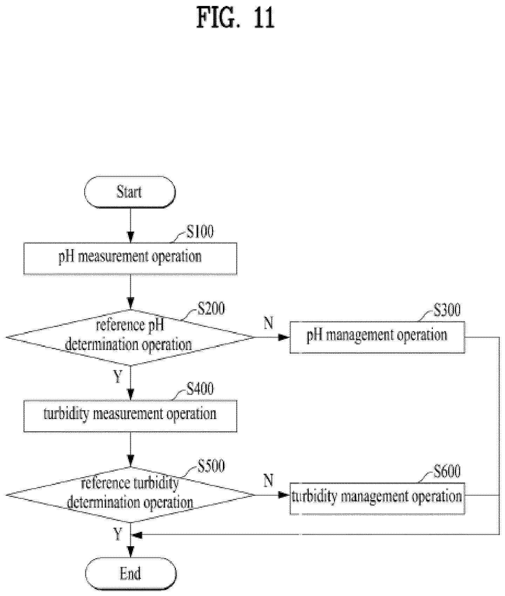

In one example, FIGS. 9 to 11 are flowcharts showing a method for controlling the plant cultivation apparatus 1 according to an embodiment of the present disclosure. FIG. 9 is a flow chart showing a pH management operation S300, FIG. 10 is a flow chart showing a turbidity management operation S600, FIG. 11 is a flowchart showing the pH management operation S300 and the turbidity management operation S600 together.

As shown in FIG. 9, the method for controlling the plant cultivation apparatus 1 according to an embodiment of the present disclosure includes a reference pH determination operation S200 and the pH management operation S300.

In the reference pH determination operation S200, the controller 300 determines whether the measurement value of the pH measuring device 112 to measure the pH of the nutrient liquid stored in the nutrient liquid storage 110 falls within the preset reference pH range SP.

When it is determined in the reference pH determination operation S200 that the measurement value of the pH measuring device 112 does not fall within the reference pH range SP, the controller 300 controls the nutrient liquid manager 200 to perform the pH management mode to adjust the pH of the nutrient liquid stored in the nutrient liquid storage 110 in the pH management operation S300.

The method for controlling the plant cultivation apparatus 1 including the pH management operation S300 with reference to FIG. 9 is described as follows. Duplicate descriptions with those as previously described in the plant cultivation apparatus 1 according to an embodiment of the present disclosure will be omitted.

The control method according to an embodiment of the present disclosure may include a pH measurement operation S100. The pH measuring device 112 112 may measure the pH value of the nutrient liquid stored in the nutrient liquid storage 110 in the pH measurement operation S100.

The control method according to an embodiment of the present disclosure may include the reference pH determination operation. In the reference pH determination operation, the controller 300 may determine whether the measurement value of the pH measuring device 112 measured in the pH measurement operation S100 falls within the preset reference pH range SP pre-stored in the controller 300.

The control method according to one embodiment of the present disclosure may include the pH management operation S300. When it is determined in the reference pH determination operation that the measurement value of the pH measuring device 112 is out of the reference pH range SP, the controller 300 controls the nutrient liquid manager 200 to adjust the pH value of the nutrient liquid in the pH management operation S300.

The pH management operation S300 may include a manager determination operation S310. In the manager determination operation S310, the manager for adjusting the pH value of the nutrient liquid in the pH management operation S300 may be determined.

For example, in the manager determination operation S310, the controller 300 determines the operation of the first manager 210 to increase the pH value when the pH value of the nutrient liquid is equal to or lower than the reference pH range SP. In the manager determination operation S310, the controller 300 determines the operation of the second manager 220 to reduce the pH value when the pH value is above the reference pH range SP.

The pH management operation S300 may include a pH management mode execution operation S320. In pH management mode execution operation S320, the controller 300 may perform the pH management mode. That is, the controller 300 may adjust the pH value of the nutrient liquid using one of the first manager 210 and the second manager 220 of the nutrient liquid manager 200 as determined in the manager determination operation S310.

The pH management operation S300 may include an adequate pH determination operation S330. In adequate pH determination operation S330, the controller 300 may determine whether the pH value of the nutrient liquid as adjusted via the pH management mode execution operation S320 falls within the adequate pH range PP.

In one example, the pH management operation S300 may include a pH management allowed time duration determination operation S340. When it is determined in the adequate pH determination operation S330 that the pH value of the nutrient liquid does not fall within the adequate pH range PP, the controller 300 may perform the pH management allowed time duration determination operation S340.

In the pH management allowed time duration determination operation S340, the controller 300 may determine whether a pH management mode duration of the pH management mode execution operation S320 exceeds the pH management allowed time duration.

In one example, the pH management operation S300 may include a nutrient liquid manager checking operation S350. When it is determined in the pH management allowed time duration determination operation S340 that the execution duration of the pH management mode execution operation S320 or the pH management mode exceeds the pH management allowed time duration, the controller 300 may perform the nutrient liquid manager checking operation S350. In the nutrient liquid manager checking operation S350, the controller 300 may transmit the check signal for checking the nutrient liquid manager 200 to the user.

In one example, when it is determined in the pH management allowed time duration determination operation S340 that the execution duration of the pH management mode execution operation S320 or the pH management mode is smaller than or equal to the pH management allowed time duration, the controller 300 may perform a first operation time duration determination operation S360.

In the first operation time duration determination operation S360, the controller 300 may determine whether a total operation time duration of the manager as determined via the manager determination operation S310 within the preset unit time duration exceeds the preset allowed operation time duration.

When it is determined in the first operation time duration determination operation S360 that the operation time duration exceeds the allowed operation time duration, the controller 300 may perform a manager disable operation S370.

In the manager disable operation In S370, the controller 300 may disable the operation of the nutrient liquid manager 200. In this case, the controller 300 may transmit a signal indicating the disabled operation of the nutrient liquid manager 200 to the user.

In one example, when it is determined in the first operation time duration determination operation S360 that the allowed operation time duration is smaller than or equal to the operation time duration, the controller 300 may continuously perform the pH management mode execution operation S320.

In one embodiment of the present disclosure, an order in which the pH management allowed time duration determination operation S340 and the first operation time duration determination operation S360 are performed may vary. For example, unlike shown in FIG. 9, the first operation time duration determination operation S360 may be performed before the pH management allowed time duration determination operation S340.

In one example, with reference to FIG. 10, the method for controlling the plant cultivation apparatus 1 including a turbidity management operation S600 will be described as follows.

Specifically, the method for controlling the plant cultivation apparatus 1 according to an embodiment of the present disclosure may include a turbidity measurement operation S400. In the turbidity measurement operation S400, the turbidity of the nutrient liquid stored in the nutrient liquid storage 110 may be measured by the turbidity measuring device 114.

After the turbidity measurement operation S400, the controller 300 may perform a reference turbidity determination operation S500. The reference turbidity determination operation S500 may be performed simultaneously with the turbidity measurement operation S400.

In the reference turbidity determination operation S500, the controller 300 may determine whether a measurement value of the turbidity measuring device 114 is greater than or equal to the preset reference turbidity.

When it is determined in the reference turbidity determination operation S500 that the measurement value of the turbidity measuring device 114 is equal to or greater than the reference turbidity, the controller 300 may perform the turbidity management operation S600. In turbidity management operation S600, the controller 300 may perform a pH measurement operation S610 for turbidity management.

In the pH measurement operation S610, the pH value of the nutrient liquid may be measured through the pH measuring device 112. After the pH measurement operation S610, the controller 300 may perform a turbidity management pH determination operation S620.

In the turbidity management pH determination operation S620, the controller 300 may determine whether the measurement value of the pH measuring device 112 is lower than or equal to the turbidity management pH value MP. When it is determined in the turbidity management pH determination operation S620 that the measurement value of the pH measuring device 112 exceeds the turbidity management pH value MP, the controller 300 may perform a pH preparation mode execution operation S630.

In the pH preparation mode execution operation S630, the controller 300 may perform the pH preparation mode. That is, the controller 300 may control the nutrient liquid manager 200 to adjust the pH value of the nutrient liquid so that the pH value of the nutrient liquid is lower than or equal to the turbidity management pH value MP. After the pH preparation mode execution operation S630, the controller 300 may perform the turbidity management pH determination operation S620 again.

In one example, when it is determined in the turbidity management pH determination operation S620 that the measurement value of the pH measuring device 112 is determined to be lower than or equal to the turbidity management pH value MP, the controller 300 may perform a turbidity management mode execution operation S640.

In the turbidity management mode execution operation S640, the controller 300 may perform the turbidity management mode. That is, the controller 300 may control the nutrient liquid manager 200 so that the nutrient liquid flows through the first manager 210 to reduce the turbidity.

After the turbidity management mode execution operation S640, the controller 300 may perform an adequate turbidity determination operation S650. In the adequate turbidity determination operation S650, the controller 300 may determine whether the measurement value of the turbidity measuring device 114 is lower than or equal to the adequate turbidity which has a value lower than the reference turbidity.

In one example, when it is determined in the adequate turbidity determination operation S650 that the measurement value of the turbidity measuring device 114 exceeds the adequate turbidity, the controller 300 may perform a turbidity management allowed time duration determination operation S660.

In the turbidity management allowed time duration determination operation S660, the controller 300 may determine whether a turbidity management mode duration of the turbidity management mode execution operation S640 exceeds a turbidity management allowed time duration.

In one example, the turbidity management operation S600 may include a nutrient liquid checking operation S670. When it is determined in the turbidity management allowed time duration determination operation S660 that the execution duration of the turbidity management mode execution operation S640 or the turbidity management mode exceeds the turbidity management allowed time duration, the controller 300 may perform a nutrient liquid checking operation S670. In the nutrient liquid checking operation S670, the controller 300 may transmit the nutrient liquid check signal to the user.

In one example, when it is determined in the turbidity management allowed time duration determination operation S660 that the execution duration of the turbidity management mode execution operation S640 or the turbidity management mode is smaller than or equal to the turbidity management allowed time duration, the controller 300 may perform a second operation time duration determination operation S680.

In the second operation time duration determination operation S680, the controller 300 may determine whether a total operation time duration of the first manager 210 for performing the turbidity management mode within the preset unit time duration exceeds the preset allowed operation time duration.

When it is determined in the second operation time duration determination operation S680 that the operation time duration exceeds the allowed operation time duration, the controller 300 may perform a manager disable operation S690.

In the manager disable operation S690, the controller 300 may disable the operation of the nutrient liquid manager 200. In this case, the controller 300 may transmit a signal indicating the disabled operation of the nutrient liquid manager 200 to the user.

In one example, when it is determined in the second operation time duration determination operation S680 that the allowed operation time duration is lower than or equal to the operation time duration, the controller 300 may continuously perform the turbidity management mode execution operation S640.

In one embodiment of the present disclosure, an order in which the turbidity management allowed time duration determination operation S660 and the second operation time duration determination operation S680 are performed may vary. For example, unlike shown in FIG. 10, the second operation time duration determination operation S680 may be performed before the turbidity management allowed time duration determination operation S660.

In one example, with reference to FIG. 11, the method for controlling the plant cultivation apparatus 1 including the pH management operation S300 and the turbidity management operation S600 together will be described as follows.

In one embodiment of the present disclosure, the controller 300 may perform the pH measurement operation S100 for measuring the pH value of the nutrient liquid and may perform the aforementioned reference pH determination operation S200.

When it is determined in the reference pH determination operation S200 that the measurement value of the pH measuring device 112 is out of the reference pH range SP, the controller 300 may perform the above-described pH management operation S300. When it is determined in the reference pH determination operation S200 that the measurement value of the pH measuring device 112 falls within the reference pH range SP, the controller 300 may perform the aforementioned reference turbidity determination operation S500.

When it is determined in the reference turbidity determination operation S500 that the measurement value of the turbidity measuring device 114 is equal to or greater than the reference turbidity, the controller 300 may perform the turbidity management operation S600 as described above.

Although the embodiments of the present disclosure have been described in more detail with reference to the accompanying drawings, the present disclosure is not necessarily limited to these embodiments. The present disclosure may be implemented in various modified manners, not departing from the technical idea of the present disclosure. Accordingly, the embodiments disclosed in the present disclosure are not intended to limit the technical idea of the present disclosure, but to describe the present disclosure. Therefore, it should be understood that the embodiments as described above are illustrative and nonlimiting in all respects. The scope of protection is defined by the appended claims.
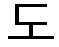 9 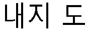 11
Start
   S100: pH measurement operation
   S200: reference pH determination operation
   S300: pH management operation
   S310: manager determination operation
   S320: pH management mode execution operation
   S330: adequate pH determination operation
   S340: pH management allowed time duration determination operation
   S350: nutrient liquid manager checking operation
   S360: first operation time duration determination operation
   S370: manager disable operation
   S400: turbidity measurement operation
   S500: reference turbidity determination operation
   S600: turbidity management operation
   S610: pH measurement operation
   S620: turbidity management pH determination operation
   S630: pH preparation mode execution operation
   S640: turbidity management mode execution operation
   S650: adequate turbidity determination operation
   S660: turbidity management allowed time duration determination operation
   S670: nutrient liquid checking operation
   S680: second operation time duration determination operation
   S690: manager disable operation
End

## Claims

1. A plant cultivation apparatus (1) comprising:
a cabinet (10) having a cultivator (30) therein, the cultivator adapted to accommodate at least a portion of a plant;
a nutrient liquid supply (100) including:
a storage part (110) adapted to store therein nutrient liquid to be supplied to the cultivator; and
a supply part (120) connected to the storage part and configured to supply the nutrient liquid from the storage part to the cultivator; and
a nutrient liquid manager (200) for managing the pH of the nutrient liquid of the nutrient liquid storage part (110), the nutrient liquid manager (200) including a first manager (210) configured to increase the pH of the nutrient liquid while removing impurities from the nutrient liquid to reduce its turbidity and a second manager (220) configured to decrease the pH of the nutrient liquid,
wherein the nutrient liquid manager is configured such that the nutrient liquid supplied from the storage part flows through one of the first manager and the second manager and then is re-supplied to the storage part.

2. The apparatus of claim 1, wherein the nutrient liquid manager (200) further includes:
a storage channel (231) extending from the storage part (110);
a valve (233) disposed in the storage channel;
a first connective channel (235) connecting the valve and the first manager (210) to each other; and
a second connective channel (237) connecting the valve and the second manager (220) to each other,
wherein the apparatus further comprises a controller (300) configured to control the valve such that nutrient liquid supplied through the storage channel flows into one of the first connective channel and the second connective channel.

3. The apparatus of claim 1 or 2, wherein the apparatus further comprises:
a pH measuring device (112) configured to measure a pH of nutrient liquid stored in the storage part; and
a controller (300) configured to control the nutrient liquid manager (200) to perform a pH management mode such that when a pH measurement value of the pH measuring device is equal to or lower than a preset reference pH range, nutrient liquid supplied from the storage part (110) flows through the first manager (210), whereas when the measurement value of the pH measuring device is greater than the reference pH range, nutrient liquid supplied from the storage part flows through the second manager (220).

4. The apparatus of claim 3, wherein the controller (300) is configured to control the nutrient liquid manager (200) to perform the pH management mode such that the measurement value of the pH measuring device (112) falls within an adequate pH range preset within the reference pH range.

5. The apparatus of claim 4, wherein when an execution duration of the pH management mode is greater than or equal to a preset pH management allowed time duration and the measurement value of the pH measuring device (112) does not fall within the adequate pH range, the controller (300) is configured to transmit a nutrient liquid manager check signal to a user.

6. The apparatus of any one of claims 3 to 5, wherein the controller (300) is configured to control the nutrient liquid manager (200) so that a total operation time duration of one of the first manager (210) and the second manager (220) within a preset unit time duration is less than or equal to a preset allowed operation time duration.

7. The apparatus of claim 6, wherein the apparatus further comprises a remaining amount measuring device (116) configured to measure a remaining amount of nutrient liquid stored in the storage part (110),
wherein the controller (300) is configured to modify the allowed operation time duration based on a measurement value of the remaining amount measuring device.

8. The apparatus of any one preceding claim, wherein the first manager (210) includes an activated carbon, wherein nutrient liquid supplied from the storage part (112) flows through the activated carbon of the first manager such that impurities are removed from the nutrient liquid and the pH of the nutrient liquid is increased.

9. The apparatus of any one preceding claim, wherein the second manager (220) is configured to apply an electrical current to nutrient liquid supplied from the storage part (110) to sterilize the nutrient liquid and reduce the pH thereof.

10. The apparatus of any one preceding claim, wherein the apparatus further comprises:
a turbidity measuring device (114) configured to measure turbidity of nutrient liquid stored in the storage part (110); and
a controller (300) configured to control the nutrient liquid manager (200) to perform a turbidity management mode such that when a measurement value of the turbidity measuring device is greater than or equal to a preset reference turbidity, nutrient liquid supplied from the storage part flows through the first manager (210).

11. The apparatus of claim 10, wherein:
when an execution duration of the turbidity management mode is greater than or equal to a preset turbidity management allowed time duration but a measurement value of the turbidity measuring device (114) is greater than or equal to a reference turbidity, the controller (300) is configured to transmit a nutrient liquid check signal to the user;
and/or
the apparatus further comprises a pH measuring device (112) configured to measure the pH of nutrient liquid stored in the storage part (112), wherein when a measurement value of the turbidity measuring device (114) is equal to or greater than a reference turbidity and a measurement value of the pH measuring device (112) is lower than or equal to a preset turbidity management pH value, the controller (300) is configured to control the nutrient liquid manager to perform the turbidity management mode.

12. The apparatus of claim 11, wherein when the measurement value of the turbidity measuring device (114) is equal to or greater than the reference turbidity, and the measurement value of the pH measuring device (112) exceeds the turbidity management pH value, the controller (300) is configured to control the nutrient liquid manager to perform a pH preparation mode such that nutrient liquid supplied from the storage part (110) flows through the second manager (220),
wherein when the measurement value of the pH measuring device is lower than or equal to the turbidity management pH value while the pH preparation mode is performed, the controller is configured to perform the turbidity management mode.

13. The apparatus of claim 12, wherein when the measurement value of the pH measuring device (112) is out of a preset reference pH range, the controller (300) is configured to control the nutrient liquid manager (200) to perform a pH management mode such that the measurement value of the pH measuring device falls within an adequate pH range preset within the reference pH range,
wherein the turbidity management pH value is set to have a value greater than or equal to a lower limit of the adequate pH range.

14. A method for controlling a plant cultivation apparatus as defined in any one preceding claim, wherein the method comprises:
a reference pH determination operation (S200) in which a controller (300) of the apparatus determines whether a measurement value of a pH measuring device (112) for measuring the pH of the nutrient liquid stored in the storage part (110) falls within a preset reference pH range; and
a pH management operation (S300) in which when it is determined in the pH management determination operation (S200) that the measurement value of the pH measuring device (112) does not fall within the reference pH range, the controller (300) controls the nutrient liquid manager (200) to perform a pH management mode to adjust a pH of the nutrient liquid stored in the storage part (110).

## Patentansprüche

1. Pflanzenzuchtvorrichtung (1), umfassend:
ein Gehäuse (10) mit einem Kultivator (30) darin, wobei der Kultivator dazu ausgelegt ist, mindestens einen Teil einer Pflanze aufzunehmen;
eine Nährstoffflüssigkeitszufuhr (100) mit:
einem Speicherteil (110), der dazu ausgelegt ist, darin eine Nährstoffflüssigkeit zu speichern, die dem Kultivator zugeführt werden soll; und
einen Versorgungsteil (120), der mit dem Speicherteil verbunden und so konfiguriert ist, dass er die Nährstoffflüssigkeit aus dem Speicherteil zum Kultivator zuführt; und
einen Nährstoffflüssigkeitsmanager (200) zum Verwalten des pH-Werts der Nährstoffflüssigkeit des Nährstoffflüssigkeitsspeicherteils (110), wobei der Nährstoffflüssigkeitsmanager (200) einen ersten Manager (210), der dazu eingerichtet ist, den pH-Wert der Nährstoffflüssigkeit zu erhöhen und gleichzeitig Verunreinigungen aus der Nährstoffflüssigkeit zu entfernen, um deren Trübung zu verringern, und einen zweiten Manager (220), der dazu eingerichtet ist, den pH-Wert der Nährstoffflüssigkeit zu verringern, umfasst,
wobei der Nährstoffflüssigkeitsmanager so eingerichtet ist, dass die aus dem Speicherteil zugeführte Nährstoffflüssigkeit durch den ersten Manager oder den zweiten Manager fließt und dann wieder dem Speicherteil zugeführt wird.

2. Vorrichtung nach Anspruch 1, wobei der Nährstoffflüssigkeitsmanager (200) ferner umfasst:
einen Speicherkanal (231), der sich von dem Speicherteil (110) aus erstreckt;
ein Ventil (233), das in dem Speicherkanal angeordnet ist;
einen ersten Verbindungskanal (235), der das Ventil und den ersten Verteiler (210) miteinander verbindet; und
einen zweiten Verbindungskanal (237), der das Ventil und den zweiten Manager (220) miteinander verbindet,
wobei die Vorrichtung ferner eine Steuereinheit (300) umfasst, die dazu eingerichtet ist, das Ventil so zu steuern, dass die durch den Speicherkanal zugeführte Nährstoffflüssigkeit in den ersten Verbindungskanal oder den zweiten Verbindungskanal fließt.

3. Vorrichtung nach Anspruch 1 oder 2, wobei die Vorrichtung ferner umfasst:
eine pH-Messvorrichtung (112), die dazu eingerichtet ist, den pH-Wert der im Speicherteil gespeicherten Nährstoffflüssigkeit messen; und
eine Steuereinheit (300), die dazu eingerichtet ist, den Nährstoffflüssigkeitsmanager (200) so zu steuern, dass er einen pH-Managementmodus ausführt, sodass, wenn ein pH-Messwert der pH-Messvorrichtung gleich oder niedriger als ein voreingestellter Referenz-pH-Bereich ist, die aus dem Speicherteil (110) zugeführte Nährstoffflüssigkeit durch den ersten Manager (210) fließt, während, wenn der Messwert der pH-Messvorrichtung größer als der Referenz-pH-Bereich ist, die aus dem Speicherteil zugeführte Nährstoffflüssigkeit durch den zweiten Manager (220) fließt.

4. Vorrichtung nach Anspruch 3, wobei die Steuereinheit (300) dazu eingerichtet ist, den Nährstoffflüssigkeitsmanager (200) so zu steuern, dass er den pH-Managementmodus so ausführt, dass der Messwert der pH-Messvorrichtung (112) innerhalb eines angemessenen pH-Bereichs liegt, der innerhalb des Referenz-pH-Bereichs voreingestellt ist.

5. Vorrichtung nach Anspruch 4, wobei, wenn eine Ausführungsdauer des pH-Managementmodus größer oder gleich einer voreingestellten zulässigen pH-Management-Zeitdauer ist und der Messwert des pH-Messgeräts (112) nicht in den angemessenen pH-Bereich fällt, die Steuereinheit (300) dazu eingerichtet ist, ein Nährstoffflüssigkeits-Manager-Prüfsignal an einen Benutzer zu übertragen.

6. Vorrichtung nach einem der Ansprüche 3 bis 5, wobei die Steuereinheit (300) dazu eingerichtet ist, den Nährstoffflüssigkeitsmanager (200) so zu steuern, dass eine Gesamtbetriebszeitdauer des ersten Managers (210) oder des zweiten Managers (220) innerhalb einer voreingestellten Einheitszeitdauer kleiner oder gleich einer voreingestellten zulässigen Betriebszeitdauer ist.

7. Vorrichtung nach Anspruch 6, wobei die Vorrichtung ferner eine Restmengenmessvorrichtung (116) umfasst, die dazu eingerichtet ist, eine Restmenge an Nährstoffflüssigkeit zu messen, die in dem Speicherteil (110) gespeichert ist,
wobei die Steuereinheit (300) dazu eingerichtet ist, die zulässige Betriebsdauer auf der Grundlage eines Messwerts der Restmengenmessvorrichtung zu modifizieren.

8. Vorrichtung nach einem der vorstehenden Ansprüche, wobei der erste Manager (210) eine Aktivkohle umfasst, wobei die aus dem Speicherteil (112) zugeführte Nährstoffflüssigkeit durch die Aktivkohle des ersten Managers fließt, so dass Verunreinigungen aus der Nährstoffflüssigkeit entfernt werden und der pH-Wert der Nährstoffflüssigkeit erhöht wird.

9. Vorrichtung nach einem der vorstehenden Ansprüche, wobei der zweite Manager (220) dazu eingerichtet ist, einen elektrischen Strom an die aus dem Speicherteil (110) zugeführte Nährstoffflüssigkeit anzulegen, um die Nährstoffflüssigkeit zu sterilisieren und deren pH-Wert zu senken.

10. Vorrichtung nach einem der vorstehenden Ansprüche, wobei die Vorrichtung ferner umfasst:
eine Trübungsmessvorrichtung (114), die dazu eingerichtet ist, die Trübung der im Speicherteil (110) gespeicherten Nährstoffflüssigkeit zu messen; und
eine Steuereinheit (300), die dazu eingerichtet ist, den Nährstoffflüssigkeitsmanager (200) so zu steuern, dass er einen Trübungsmanagementmodus ausführt, sodass, wenn ein Messwert der Trübungsmessvorrichtung größer oder gleich einer voreingestellten Referenztrübung ist, die aus dem Speicherteil zugeführte Nährstoffflüssigkeit durch den ersten Manager (210) fließt.

11. Vorrichtung nach Anspruch 10, wobei
wenn eine Ausführungsdauer des Trübungsmanagementmodus größer oder gleich einer voreingestellten zulässigen Trübungsmanagement-Zeitdauer ist, aber ein Messwert der Trübungsmessvorrichtung (114) größer oder gleich einer Referenztrübung ist, die Steuereinheit (300) dazu eingerichtet ist, ein Nährstoffflüssigkeits-Prüfsignal an den Benutzer zu übertragen;
und/oder
die Vorrichtung ferner eine pH-Messvorrichtung (112) umfasst, die dazu eingerichtet ist, den pH-Wert der in dem Speicherteil (112) gespeicherten Nährstoffflüssigkeit zu messen, wobei, wenn ein Messwert der Trübungsmessvorrichtung (114) gleich oder größer als eine Referenztrübung ist und ein Messwert der pH-Messvorrichtung (112) kleiner oder gleich einem voreingestellten Trübungsmanagement-pH-Wert ist, die Steuereinheit (300) dazu eingerichtet ist, den Nährstoffflüssigkeitsmanager so zu steuern, dass er den Trübungsmanagementmodus ausführt.

12. Vorrichtung nach Anspruch 11, wobei, wenn der Messwert der Trübungsmessvorrichtung (114) gleich oder größer als die Referenztrübung ist und der Messwert der pH-Messvorrichtung (112) den Trübungsmanagement-pH-Wert überschreitet, die Steuereinheit (300) dazu eingerichtet ist, den Nährstoffflüssigkeitsmanager so zu steuern, dass er einen pH-Vorbereitungsmodus ausführt, sodass die aus dem Speicherteil (110) zugeführte Nährstoffflüssigkeit durch den zweiten Manager (220) fließt,
wobei, wenn der Messwert der pH-Messvorrichtung während der Durchführung des pH-Vorbereitungsmodus kleiner oder gleich dem Trübungsmanagement-pH-Wert ist, die Steuereinheit dazu eingerichtet ist, den Trübungssteuerungsmodus auszuführen.

13. Vorrichtung nach Anspruch 12, wobei, wenn der Messwert der pH-Messvorrichtung (112) außerhalb eines voreingestellten Referenz-pH-Bereichs liegt, die Steuereinheit (300) dazu eingerichtet ist, den Nährstoffflüssigkeitsmanager (200) so zu steuern, dass er einen pH-Managementmodus ausführt, sodass der Messwert der pH-Messvorrichtung in einen angemessenen pH-Bereich fällt, der innerhalb des Referenz-pH-Bereichs voreingestellt ist,
wobei der Trübungsmanagement-pH-Wert so eingestellt ist, dass er größer oder gleich einer Untergrenze des angemessenen pH-Bereichs ist.

14. Verfahren zum Steuern einer Pflanzenzuchtvorrichtung gemäß einem der vorstehenden Ansprüche, wobei das Verfahren umfasst:
einen Referenz-pH-Bestimmungsvorgang (S200), bei dem eine Steuereinrichtung (300) der Vorrichtung bestimmt, ob ein Messwert einer pH-Messvorrichtung (112) zum Messen des pH-Werts der in dem Speicherteil (110) gespeicherten Nährstoffflüssigkeit innerhalb eines voreingestellten Referenz-pH-Bereichs liegt; und
ein pH-Managementvorgang (S300), bei dem, wenn im pH-Management-Bestimmungsvorgang (S200) festgestellt wird, dass der Messwert des pH-Messgeräts (112) nicht innerhalb des Referenz-pH-Bereichs liegt, die Steuereinheit (300) den Nährstoffflüssigkeitsmanager (200) so steuert, dass er einen pH-Management-Modus ausführt, um den pH-Wert der im Speicherteil (110) gespeicherten Nährstoffflüssigkeit anzupassen.

## Revendications

1. Appareil de culture de plante (1) comprenant:
un cultivateur (10) comprenant un cultivateur (30), le cultivateur étant conçu pour recevoir au moins une partie d'une plante;
une alimentation en liquide nutritif (100) comprenant:
une partie de stockage (110) servant à stocker un liquide nutritif destiné à être fourni au cultivateur; et
une partie d'alimentation (120) reliée à la partie de stockage et conçue pour alimenter le cultivateur en liquide nutritif provenant de la partie de stockage; et
un système de gestion de liquide nutritif (200) servant à gérer le pH du liquide nutritif de la partie de stockage de liquide nutritif (110), le système de gestion de liquide nutritif (200) comprenant un premier système de gestion (210) conçu pour augmenter le pH du liquide nutritif tout en éliminant les impuretés du liquide nutritif afin de réduire sa turbidité, et un deuxième système de gestion (220) conçu pour diminuer le pH du liquide nutritif,
dans lequel le système de gestion de liquide nutritif est conçu de telle sorte que le liquide nutritif provenant de la partie de stockage s'écoule dans l'un parmi le premier système de gestion et le deuxième système de gestion, puis est retourné dans la partie de stockage.

2. Appareil selon la revendication 1, dans lequel le système de gestion de liquide nutritif (200) comprend en outre:
un canal de stockage (231) partant de la partie de stockage (110);
une vanne (233) disposée dans le canal de stockage;
un premier canal de connexion (235) reliant la vanne et le premier système de gestion (210) l'un à l'autre; et
un deuxième canal de connexion (237) reliant la vanne et le deuxième système de gestion (220) l'un à l'autre; et
dans lequel l'appareil comprend en outre un dispositif de commande (300) conçu pour régler la vanne de telle sorte que le liquide nutritif fourni par le canal de stockage s'écoule dans l'un parmi le premier canal de connexion et le deuxième canal de connexion.

3. Appareil selon la revendication 1 ou 2, l'appareil comprenant en outre:
un dispositif de mesure du pH (112) conçu pour mesurer le pH du liquide nutritif stocké dans la partie de stockage; et
un dispositif de commande (300) conçu pour amener le système de gestion de liquide nutritif (200) à exécuter un mode de gestion de pH de telle sorte que, lorsque la valeur de mesure de pH du dispositif de mesure de pH est inférieure ou égale à une plage de pH de référence prédéfinie, le liquide nutritif fourni par la partie de stockage (110) s'écoule dans le premier système de gestion (210), tandis que lorsque la valeur de mesure du dispositif de mesure de pH est supérieure à la plage de pH de référence, le liquide nutritif fourni par la partie de stockage s'écoule dans le deuxième système de gestion (220).

4. Appareil selon la revendication 3, dans lequel le dispositif de commande (300) est conçu pour amener le système de gestion de liquide nutritif (200) à exécuter le mode de gestion de pH de telle sorte que la valeur mesurée par le dispositif de mesure de pH (112) se situe dans une plage de pH adéquate prédéfinie dans la plage de pH de référence.

5. Appareil selon la revendication 4, dans lequel lorsque la durée d'exécution du mode de gestion de pH est supérieure ou égale à une durée prédéfinie autorisée pour la gestion de pH et que la valeur mesurée par le dispositif de mesure de pH (112) ne se situe pas dans la plage de pH adéquate, le dispositif de commande (300) est conçu pour transmettre un signal de vérification de gestion de liquide nutritif à un utilisateur.

6. Appareil selon l'une quelconque des revendications 3 à 5, dans lequel le dispositif de commande (300) est conçu pour commander le système de gestion de liquide nutritif (200) de telle sorte que la durée totale de fonctionnement de l'un parmi le premier système de gestion (210) et le deuxième système de gestion (220) dans une durée d'unité de temps soit inférieure ou égale à une durée de fonctionnement autorisée prédéfinie.

7. Appareil selon la revendication 6, l'appareil comprend en outre un dispositif de mesure de quantité restante (116) conçu pour mesurer une quantité restante de liquide nutritif stocké dans la partie de stockage (110),
dans lequel le dispositif de commande (300) est conçu pour modifier la durée de fonctionnement autorisée sur la base d'une valeur de mesure du dispositif de mesure de quantité restante.

8. Appareil selon l'une quelconque revendication précédente, dans lequel le premier système de gestion (210) comprend un charbon actif, dans lequel le liquide nutritif fourni par la partie de stockage (112) traverse le charbon actif du premier système de gestion de manière à éliminer les impuretés du liquide nutritif et à augmenter le pH du liquide nutritif.

9. Appareil selon l'une quelconque revendication précédente, dans lequel le deuxième système de gestion (220) est conçu pour appliquer un courant électrique au liquide nutritif fourni par la partie de stockage (110) permettant de stériliser le liquide nutritif et de réduire son pH.

10. Appareil selon l'une quelconque revendication précédente, l'appareil comprenant en outre:
un dispositif de mesure de turbidité (114) conçu pour mesurer la turbidité du liquide nutritif stocké dans la partie de stockage (110); et
un dispositif de commande (300) conçu pour amener le système de gestion de liquide nutritif (200) à exécuter un mode de gestion de turbidité de telle sorte que, lorsque la valeur mesurée par le dispositif de mesure de turbidité est supérieure ou égale à une turbidité de référence prédéfinie, le liquide nutritif fourni par la partie de stockage s'écoule dans le premier système de gestion (210).

11. Appareil selon la revendication 10, dans lequel:
lorsque la durée d'exécution du mode de gestion de turbidité est supérieure ou égale à une durée prédéfinie autorisée pour la gestion de turbidité et que la valeur mesurée par le dispositif de mesure de turbidité (114) est supérieure ou égale à une turbidité de référence, le dispositif de commande (300) est conçu pour transmettre un signal de vérification de gestion de liquide nutritif à l'utilisateur.
et/ou
l'appareil comprend en outre un dispositif de mesure de pH (112) conçu pour mesurer le pH du liquide nutritif stocké dans la partie de stockage (112), dans lequel, lorsque la valeur mesurée par le dispositif de mesure de turbidité (114) est supérieure ou égale à une turbidité de référence et que la valeur mesurée par le dispositif de mesure de pH (112) est inférieure ou égale à une valeur de pH de gestion de turbidité prédéfinie, le dispositif de commande (300) est conçu pour amener le système de gestion de liquide nutritif à exécuter le mode de gestion de turbidité.

12. Appareil selon la revendication 11, dans lequel lorsque la valeur mesurée par le dispositif de mesure de turbidité (114) est supérieure ou égale à la turbidité de référence, et que la valeur mesurée par le dispositif de mesure de pH (112) dépasse la valeur de pH de gestion de turbidité, le dispositif de commande (300) est conçu pour amener le système de gestion de liquide nutritif à exécuter un mode de préparation de pH de telle sorte que le liquide nutritif fourni par la partie de stockage (110) s'écoule dans le deuxième système de gestion (220),
dans lequel, lorsque la valeur mesurée par le dispositif de mesure de pH est inférieure ou égale à la valeur de pH de gestion de turbidité pendant que le mode de préparation de pH est activé, le dispositif de commande est conçu pour exécuter le mode de gestion de turbidité.

13. Appareil selon la revendication 12, dans lequel lorsque la valeur mesurée par le dispositif de mesure de pH (112) se situe en dehors d'une plage de pH de référence prédéfinie, le dispositif de commande (300) est conçu pour amener le système de gestion de liquide nutritif (200) à exécuter un mode de gestion de pH de telle sorte que la valeur mesurée par le dispositif de mesure de pH se situe dans une plage de pH adéquate prédéfinie dans la plage de pH de référence,
dans lequel la valeur du pH pour la gestion de turbidité est réglée de manière à ce qu'elle soit supérieure ou égale à une limite inférieure de la plage de pH adéquate.

14. Procédé de commande d'un appareil de culture de plante selon l'une quelconque revendication précédente, le procédé comprenant:
une opération de détermination de pH de référence (S200) au cours de laquelle un dispositif de réglage (300) de l'appareil détermine si une valeur de mesure d'un dispositif de mesure de pH (112) servant à mesurer le pH du liquide nutritif stocké dans la partie de stockage (110) se situe dans une plage de pH de référence prédéfinie; et
une opération de gestion de pH (S300) au cours de laquelle, lorsqu'il est déterminé lors de l'opération de détermination de gestion de pH (S200) que la valeur de mesure du dispositif de mesure de pH (112) ne se situe pas dans la plage de pH de référence, le dispositif de commande (300) amène le système de gestion de liquide nutritif (200) à exécuter un mode de gestion de pH afin d'ajuster le pH du liquide nutritif stocké dans la partie de stockage (110).
